(19) Europäisches Patentamt
European Patent Office
Office européen des brevets

(11) **EP 1 521 058 B1**

(12) **EUROPEAN PATENT SPECIFICATION**

(45) Date of publication and mention
of the grant of the patent:
**12.03.2008 Bulletin 2008/11**

(51) Int Cl.:
***G01C 21/34*** *(2006.01)*    ***G08G 1/0968*** *(2006.01)*

(21) Application number: **04255400.6**

(22) Date of filing: **07.09.2004**

(54) **Guiding device, system and method**

Zielführungsvorrichtung, System und Verfahren

Appareil, système et procédé pour guidage

(84) Designated Contracting States:
**DE FR GB**

(30) Priority: **30.09.2003  JP 2003340029**

(43) Date of publication of application:
**06.04.2005  Bulletin 2005/14**

(73) Proprietors:
• **Pioneer Corporation**
**Tokyo 153-8654 (JP)**
• **Increment P Corporation**
**Tokyo 153-8665 (JP)**

(72) Inventors:
• **Hirose, Koji**
**c/o Increment P Corporation**
**Meguro-ku**
**Tokyo 153-8665 (JP)**

• **Suzuki, Nobuaki**
**c/o Increment P Corporation**
**Meguro-ku**
**Tokyo 153-8665 (JP)**

(74) Representative: **Haley, Stephen**
**Gill Jennings & Every LLP**
**Broadgate House**
**7 Eldon Street**
**London EC2M 7LH (GB)**

(56) References cited:
**US-A- 5 220 507          US-A1- 2002 087 263**
**US-A1- 2002 128 766      US-A1- 2002 152 020**
**US-A1- 2002 177 947      US-A1- 2003 144 794**

**Description**

The present invention relates to a guiding device for navigating a movable body, a system thereof, a method thereof, a program thereof, and a recording medium storing the program.

There has been a known in-vehicle navigation device that acquires traffic information (VICS data) such as traffic accidents and traffic-congestions etc. from a Vehicle Information Communication System (VICS) and superimposes indications representing the traffic conditions information about the traffic accidents and the traffic-congestions on map information displayed on a screen of a display unit in order to notify users. In many cases, when a traffic-congestion occurs, a secondary traffic-congestion might be caused on the roads in the vicinity thereof by drivers making a detour to avoid the first traffic-congestion. The traffic condition provided based on the VICS data represents the current condition, and therefore the drivers making a detour to avoid the traffic-congestion based on the notified current traffic condition might be caught in the secondary traffic-congestion. Thus, there is a demand for improved navigation devices that can navigate drivers to travel smoothly.

There is also a know in-vehicle navigation device that predicts and notifies the current and future traffic conditions with the use of a statistical traffic-congestion information data obtained by statistically processing the past traffic-congestion information (see, for example, Reference: Japanese Patent Laid-Open Publication No. Hei 9-113290, the right column on page 3 to the left column on page 7). An in-vehicle navigation device disclosed in the above-cited Reference notifies statistical traffic-congestion information according to time factors such as time and day of the week based on the statistical traffic-congestion data by superimposing the information on map information in various display forms corresponding to conditions of the traffic-congestions. With the notified time and day of the week, users can predict current and possible future traffic-congestions.

However, the traffic-congestion notified based on the statistical traffic-congestion information data obtained by statistically processing the past traffic-congestion as in the above-cited Reference only represents the traffic-congestions at the specific time and day of the week, and a user cannot recognize how the current traffic-congestion will change with the course of time. For instance, if the traffic-congestion on the road ahead will be sorted out by the time a vehicle reaches, there is no need to avoid the traffic-congestion. Therefore, for traveling smoothly, the user should recognize how the condition of the traffic-congestion will change. The user thus needs to be informed of the condition of the traffic-congestion at the time around the current time and then to make a prediction based on the notified information. However, it is difficult for the user to recognize how the condition of the traffic-congestion will change.

US-A-2002/0128766 discloses a navigational system.

An object of the present invention is to provide a guiding device for effectively navigating a movable body, a system thereof, a method thereof, a program thereof and a recording medium storing the program.

According to a first aspect of the invention, there is provided a guiding device for navigating a travel of a movable body, comprising:

    a map information acquirer for acquiring map information;
    a current-position information acquirer for acquiring current-position information about a current-position of the movable body;
    a destination information acquirer for acquiring destination information about a position of a destination to which the movable body travels;
    a traffic information acquirer for acquiring traffic information about a traffic condition for the movable body; and
    a travel route search section that searches for a plurality of travel routs for the movable body based on the current position information, the destination information and the map information;

the guiding device characterised by including:

    a travel smoothness recognizer for recognizing travel smoothness of the plurality of travel routes for the movable body to travel based on the traffic information;
    a travel route setting section that calculates each selection percentage of the plurality of travel routes based on the travel smoothness, and set a recommended travel route based on the selection percentage; and
    a notification section for notifying the recommended travel route.

According to a second aspect of the invention, there is provided a guiding system comprising:

    a terminal unit having: a request signal generating section for generating a request signal requesting a travel route; and an output section for outputting the travel route; and
    a server that is connected to the terminal unit for communicating therewith over a network and provided with:

a storage for storing map information;

a current-position information acquirer for acquiring current-position information about a current-position of a movable body;

a destination information acquirer for acquiring destination information about a position of a destination to which the movable body travels;

a traffic information acquirer for acquiring traffic information about a traffic condition for the movable body;

a request signal recognizer for recognizing the request signal; and

a travel route search that searches for a plurality of travel routes in accordance with the recognized travel smoothness and based on the current position information, the destination information and the map information; the guiding system characterised in that the server further includes:

a travel smoothness recognizer that recognizes travel smoothness for the movable body to travel based on the traffic information;

a travel route setting section that calculates each selection percentage of the plurality of travel routes when the request signal recognizer recognizes the request signal and sets a recommended travel route based on the selection percentage; and

a notification section for notifying the recommended travel route to the terminal unit so that the travel route can be output by the output section of the terminal unit.

According to another aspect of the invention, there is provided a guiding method comprising:

acquiring map information, current-position information about a current-position of a movable body, destination information about a position of a destination to which the movable body travels, and traffic information about a traffic condition for the movable body;

searching for a travel route for the movable body based on the current-position information, the destination information and the map information;

recognizing travel smoothness for the movable body to travel on the plurality of travel routes based on the traffic information;

calculating each selection percentage of the plurality of travel routes based on the travel smoothness on the plurality of travel routes; and

setting and notifying a recommended travel route based on the selection percentage.

According to another aspect of the invention, there is provided a guiding program for executing a guiding method according to the invention by a computer.

According to a further aspect of the invention, there is provided a recording medium storing a guiding program according to the invention in a manner readable by a computer.

In the drawings:-

FIG. 1 is a schematic block diagram showing a configuration of a navigation device according to a first embodiment of the present invention;

FIG. 2 is a conceptual illustration schematically showing a table structure for a display data of map information according to the first embodiment;

FIG. 3 is a conceptual illustration schematically showing a table structure for a matching data of the map information according to the first embodiment;

FIG. 4 is a conceptual illustration schematically showing a table structure for a data in a traffic-congestion prediction table according to the first embodiment;

FIG. 5 is a conceptual illustration schematically showing a table structure for a data in a calendar template according to the first embodiment;

FIG. 6 is a schematic block diagram showing a configuration of a processor of the navigation device according to the first embodiment;

FIG. 7 is a conceptual illustration showing routes of which weighting information is generated in a step for setting a travel route according to the first embodiment;

FIG. 8 is a flowchart showing the processing for modifying the calendar template according to the first embodiment;

FIG. 9 is a conceptual illustration schematically showing the table structure for the data in the calendar template updated by a calendar modifier according to the first embodiment;

FIG. 10 is a flowchart showing the processing for travel route search according to the first embodiment;

FIG. 11 is a flowchart showing the reroute search processing for reroute search according to the first embodiment;

FIG. 12 is a schematic block diagram showing a configuration of a navigation system according to a second embodiment of the present invention;

FIG. 13 is a schematic block diagram showing a configuration of a terminal unit according to the second embodiment;

FIG. 14 is a schematic block diagram showing a configuration of a processor of the terminal unit according to the second embodiment;

FIG. 15 is a schematic block diagram showing a configuration of a server according to the second embodiment;

FIG. 16 is a schematic block diagram showing a configuration of a CPU of the server according to the second embodiment;

FIG. 17 is a flowchart showing the processing for modifying a calendar template according to the second embodiment; and

FIG. 18 is a flowchart showing the processing for travel route search according to the second embodiment.

[First Embodiment]

Now, a first embodiment of the present invention will be described with reference to the attached drawings. A navigation device of this embodiment is an example of a guiding device of the present invention, and so designed to navigate a movable body (e.g. a vehicle) for the travel or drive thereof. It should be noted that the guiding device of the present invention is not necessarily designed to navigate a vehicle for the drive thereof, but may be so designed to notify traffic information for any types of movable body.

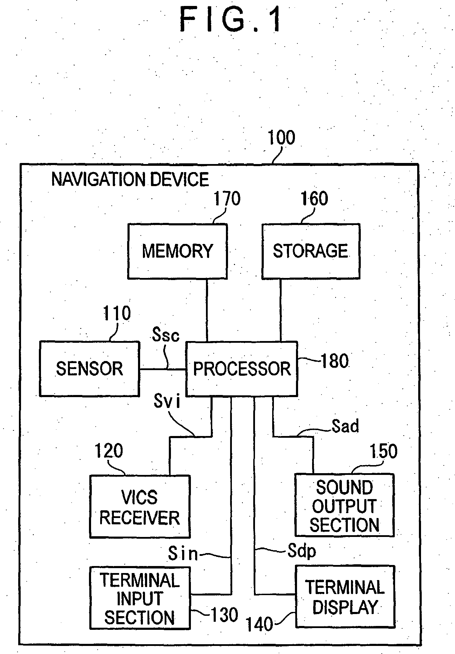

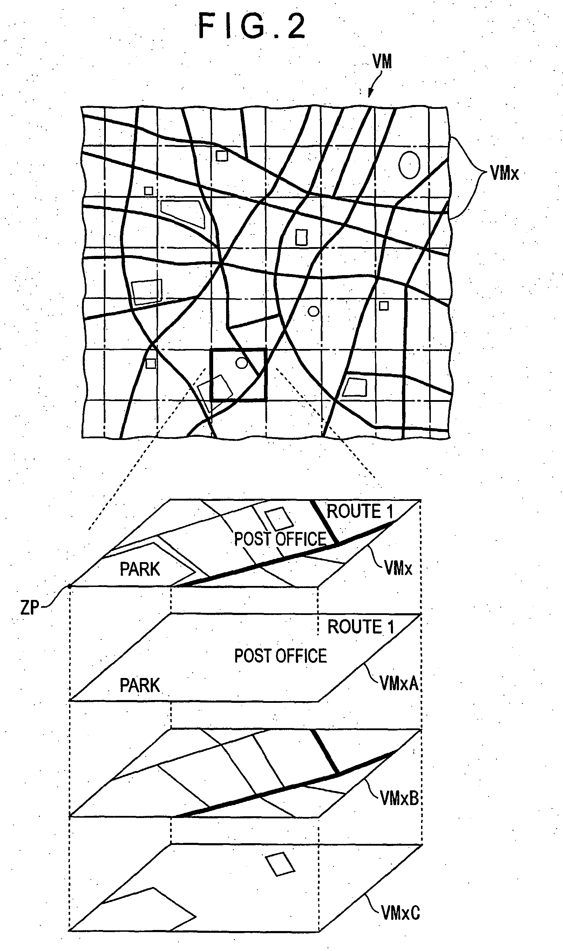

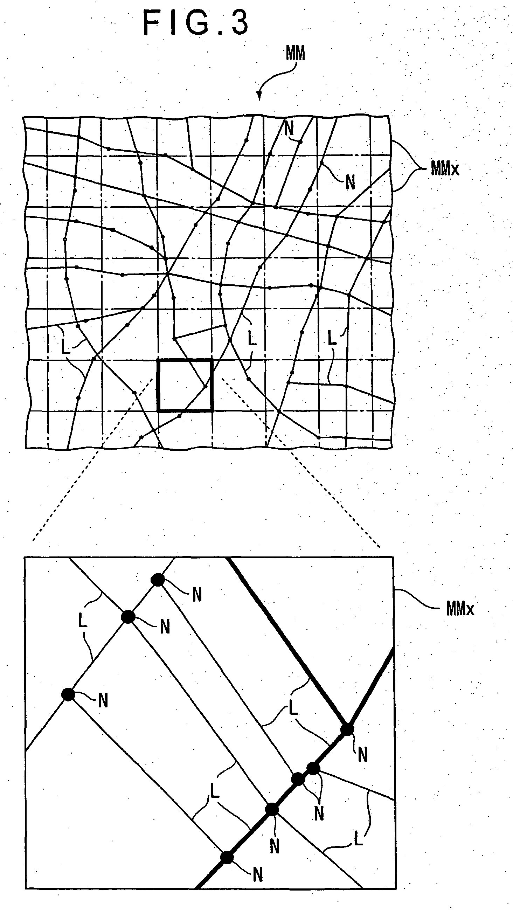

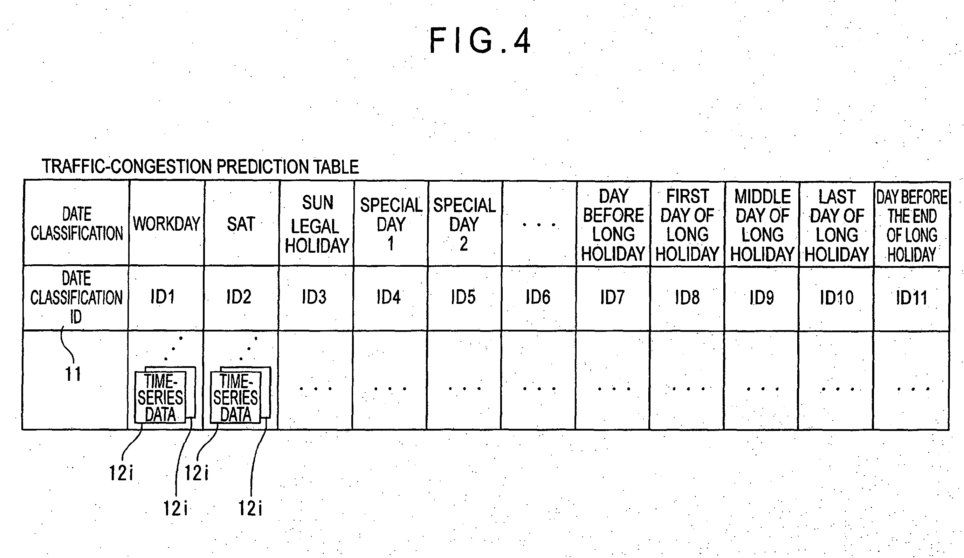

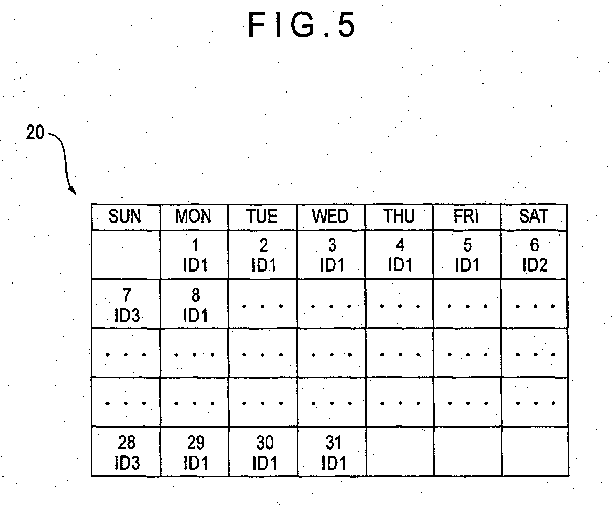

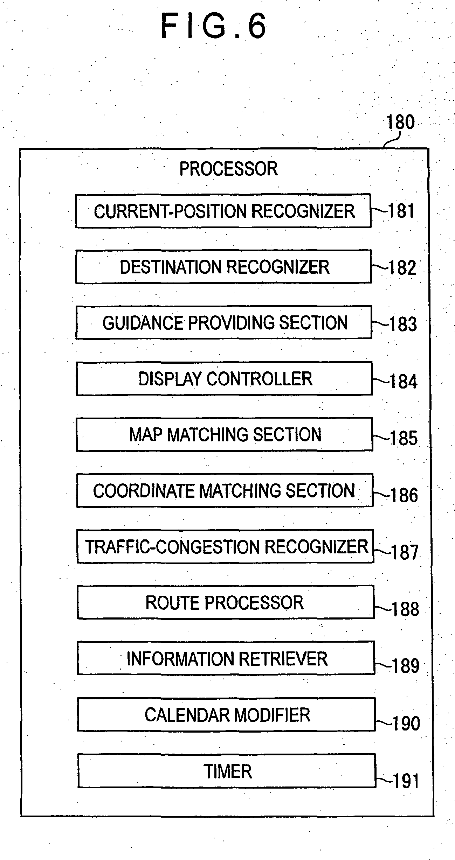

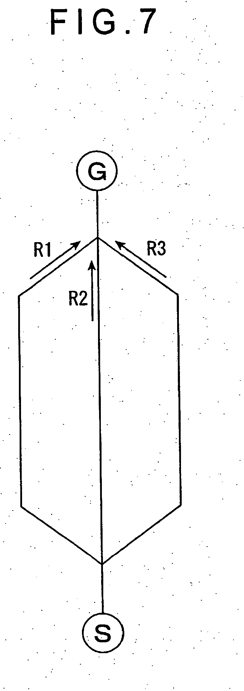

FIG. 1 is a schematic block diagram showing a configuration of the navigation device according to the first embodiment. Fig. 2 is a conceptual illustration schematically showing a table for a display data of map information. Fig. 3 is a conceptual illustration schematically showing a table for a matching data of the map information. Fig. 4 is a conceptual illustration schematically showing a table structure for a data in a traffic-congestion prediction table. Fig. 5 is a conceptual illustration schematically showing a table structure for a data in a calendar template. Fig. 6 is a block diagram schematically showing a configuration of a processor of the navigation device. FIG. 7 is a conceptual illustration showing routes of which weighting information is generated in a step for setting a travel route.

[Configuration of Navigation Device]

Referring to FIG. 1, the reference numeral 100 denotes the navigation device (guiding device). The navigation device 100 notifies guidance on a travel along with a travel progress of a movable body (e.g. a vehicle). The movable body is not limited to a vehicle, but includes any types of movable body such as an aircraft and a ship. The navigation device 100 may be, for example, an in-vehicle unit installed in a vehicle as a movable body, a portable unit, a PDA (Personal Digital Assistant), a mobile phone, a PHS (Personal Handyphone System) or a portable personal computer. The navigation device 100 searches for and displays information about a current-position and a destination, a route to the destination, predetermined shops nearby, and information about services offered by the shops on the basis of map information stored in the navigation device 100. As shown in FIG. 1, the navigation device 100 has a sensor 110, a VICS (Vehicle Information Communication System) receiver 120 that operates as a traffic information acquirer, a terminal input section 130, a terminal display 140 that is a display section of a notifying section, a sound output section 150 of the notifying section, a storage 160, a memory 170, a processor 180 and so on.

The sensor 110 detects the travel progress of a movable body (e.g. a vehicle), or the current-position and the driving status, and outputs it as a predetermined signal Ssc to the processor 180. The sensor 110, for instance, has a GPS (Global Positioning System) receiver (not shown) and various sensors (not shown) such as a speed sensor, an azimuth sensor and an acceleration sensor.

The GPS receiver receives electric navigation waves output from a GPS satellite (not shown), which is an artificial satellite, via a GPS antenna (not shown). Then, the GPS receiver computes simulated coordinate values of the current-position on the basis of a signal corresponding to the received electric navigation waves and outputs the simulated coordinate values as a GPS data to the processor 180.

The speed sensor of the sensor 110 is arranged on a movable body (e.g. a vehicle) so as to detect the driving speed and the actual acceleration of the vehicle on the basis of a signal that varies depending on the driving speed, or the travel speed, of the vehicle. The speed sensor reads a pulse signal, a voltage value and the like output in response to the revolution of the axles and the wheels of the vehicle. Then, the speed sensor outputs detection information such as the read pulse signal and the voltage value to the processor 180. The azimuth sensor is arranged on the vehicle and provided with a so-called gyro-sensor (not shown) so as to detect the azimuth of the vehicle, i.e., the driving direction to which the vehicle is heading. The azimuth sensor outputs a signal representing detection information about the detected driving direction to the processor 180. The acceleration sensor is arranged on the vehicle so as to detect the acceleration of the vehicle in the driving direction thereof. The acceleration sensor converts the detected acceleration into a sensor output value, which is detection information such as the pulse and the voltage, and then outputs the sensor output value to the processor 180.

The VICS receiver 120 has a VICS antenna (not shown) and acquires traffic information via the VICS antenna. More specifically, the VICS receiver 120 acquires traffic information (hereinafter referred to as VICS data) about traffic-congestions, traffic accidents, constructions, traffic controls and so on from the VICS (not shown) by way of a beacon, FM multiplex broadcasting or the like. The acquired traffic information is output as a predetermined signal Svi to the processor 180.

The VICS data has a table structure typically containing a plurality of following conceptual items formed as a single data.

· traffic-congestion rating: congested, slow, smooth, etc.
· leading position of traffic-congestion
· length of traffic-congestion
· link travel time information: travel time required for a vehicle to pass through a VICS link (distance between intersections)
· zone travel time information: travel time required for a vehicle to pass through a zone longer than a VICS link
· information about traffic controls, causes thereof, controlled areas
· information about vacancies in parking areas
· information about rest areas and parking areas
· other information

The terminal input section 130, which may be a keyboard, a mouse or the like, has various operation buttons and operation knobs (not shown) to be used for input operations. The operation buttons and the operation knobs are used to input, for example, the settings for the operations of the navigation device 100. More specifically, they may be used: to set the type of information to be acquired and acquiring criteria; to set a destination; to retrieve information; and to display the driving status (travel progress) of the vehicle. When the settings are input, the terminal input section 130 outputs a predetermined signal Sin to the processor 180 so as to apply the settings. In place of the operation buttons and the operation knobs, the terminal input section 130 may include any types of input unit such as a touch panel that may be arranged at the terminal display 140 and a sound input section for the input operations thereof as long as various settings can be input.

The terminal display 140, under the control of the processor 180, displays a signal Sdp representing an image data sent from the processor 180. The image data may be those representing map information and retrieval information, TV image data received by a TV receiver (not shown), those stored in an external device or recording medium such as an optical disk, a magnetic disk or a memory card and read by a drive or a driver, and those in the memory 170. The terminal display 140 may typically be a liquid-crystal display panel, an organic EL (Electro Luminescence) panel, a PDP (Plasma Display Panel), a CRT (Cathode-Ray Tube), a FED (Field Emission Display), or an electrophoretic display.

The sound output section 150 has an audio section such as a speaker (not shown). The sound output section 150, under the control of the processor 180, outputs various signals Sad as sounds from the audio section. The various signals Sad represent the sound data etc. from the processor 180. Information output as sounds, which may be the driving direction and the driving status of the vehicle, are notified to occupants such as a driver of the vehicle for navigating the vehicle. The audio section may output a TV sound data received by a TV receiver (not shown) and a sound data stored in a recording medium or the memory 170. In place of the audio section, the sound output section 150 may use an audio section equipped on the vehicle.

The storage 160 readably stores map information as shown in FIGS. 2 and 3 and a traffic-congestion prediction table 10 as shown in FIG. 4. Although not shown, the storage 160 includes a map information storage area for storing the map information and a traffic-congestion prediction table storage area for storing the traffic-congestion prediction table 10. While the storage 160 has the above-mentioned two storage areas in this embodiment, the storage 160 may not have any of the above-mentioned storage areas, or may have additional storage areas. The storage 160 may include drives or drivers for readably storing a data on a storage medium such as a HD (Hard Disk), a DVD (Digital Versatile Disk), an optical disk and a memory card.

The map information includes a display data VM, which is a so-called POI (Point Of Interest) data as shown in FIG. 2, a matching data MM as shown in FIG. 3, a route search map data and the like.

The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area. Each display mesh information VMx has a rectangular shape with each side thereof having a predetermined length, which is reduced relative to the actual geographic length according to the map scale. A predetermined corner thereof contains absolute coordinates ZP in the whole map information, e.g., a global map.

The display mesh information VMx is, for instance, constituted from name information VMxA such as intersection names, road information VMxB and background information VMxC. The name information VMxA is a data structured in a table for arranging and displaying a miscellaneous element data (e.g. intersection name, town name) contained in an area at a predetermined position with reference to the positional relationship based on the absolute coordinates ZP. The road information VMxB is a data structured in a table for arranging and displaying a road element data (e.g. road) contained in an area at a predetermined position with reference to the positional relationship based on the absolute coordinates ZP. The background information VMxC is a data structured in a table for arranging and displaying a miscellaneous element data (e.g. mark and image information representing famous spots and buildings) at a predetermined position with reference to the positional relationship based on the absolute coordinates ZP.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. Each matching mesh information MMx has a rectangular shape with each side thereof having a predetermined length, which is reduced relative to the actual geographic length according to the map scale. A predetermined corner thereof contains absolute coordinates ZP in the whole map information, e.g., a global map. The matching mesh information MMx and the display mesh information VMx may not necessarily represent the same area. That is, they may be divided according to different scales. If a same scale is used, unique number information may be used for associating the data. If a different scale is used, the absolute coordinates may be used for associating the data.

The matching data MM is used for the map matching processing for correcting the displayed information to locate a mark representing the vehicle on a road, when the travel progress of the vehicle is superimposed on the map information. This processing prevents such errors that the mark representing the vehicle is displayed on a building instead of the road. The matching data MM has a plurality of link string block information.

As shown in Fig. 3, the link string block information is a data structured in a table so that a plurality of links L are mutually associated according to a predetermined rule. The link L as segment information represents a road and connects nodes N as the point information. Specifically, the links L each corresponding to a predetermined segment of a road are mutually connected like a line as a link string, which represents a continuous road such as Koshu street and Ome street. Each link L has unique segment information (hereafter referred to as a link ID) as a unique number assigned to each link L, and node information as a unique number indicating two nodes N connected by the link L. Each link L is associated with a VICS link to match the positional relationship between the VICS data and the displayed map.

Each node N represents a joint point such as an intersection, a corner, a fork, a junction or the like of each road. Information about the node N has unique point information as a unique number assigned to each node N in the link string block information, coordinate information of the position where each node N is located, and flag information as branching information describing whether the node N represents a branching position (e.g. intersection, fork) where a plurality of links are crossed or not. Some nodes N only have the unique point information and the coordinate information without the flag information for simply representing the shape of a road, and some nodes N additionally have attribute information representing the road structure such as width of a tunnel or a road. The nodes N without the flag information for simply representing the road shapes are not used when a coordinate matching section 186 (which will be described later) identifies a point.

The route search map information is structured in a table, which is similar to that of the matching data MM, including the point information for representing points such as the nodes N for representing roads, and the segment information for connecting points such as the links L. The information is so structured to represent roads for searching for the travel route.

The traffic-congestion prediction table 10, which includes statistical traffic information obtained by statistically processing the past traffic conditions based on time factors, is a data set for showing traffic conditions in the past at an arbitrary location. The traffic-congestion prediction table 10 is used to predict traffic-congestions at the processing for travel route search and the processing for displaying a map. The traffic-congestion prediction table 10, as shown in FIG. 4, stores a plurality of records, each single record containing a date classification ID (identification) 11, a time-series data 12i (i representing a natural number) and the like.

The date classification ID 11 is typically an ID number representing a classification of date of the year and day of the week. In the following description, classification of date of the year and day of the week will be referred to as date classification. For example, "ID1" may indicate any "workday" such as Monday to Friday excluding legal holidays; "ID2" may indicate "Saturday" excluding legal holidays; "ID4" may indicate "special day 1" such as a festival day of City A; "ID5" may indicate "special day 2" such as a day when a sports meeting is held at Athletic Ground B; "ID7" may indicate "the day before a long holiday" such as the day before four consecutive holidays; and "ID 11" may indicate "the day before the end of a long holiday" such as the third day of four consecutive holidays. The date classification ID 11 is not limited to the ID number, but may alternatively be a text data directly related to a day such as "workday".

The time-series data 12i is a data on the tendency of traffic-congestions of the traffic conditions. For example, a VICS data may be acquired from the VICS and stored for each VICS link, and then statistically processed for every 10 minutes based on the time factor of the stored VICS link (i.e., date classification) so as to be used as the time-series data 12i. In other words, the time-series data 12i is a data representing conditions of traffic-congestions at desired locations (which might be each VICS link) for every predetermined time, such as the length of the traffic-congestions, the traffic-congestion ratings and the time required for passing through the traffic-congestions. While the time-series data 12i described above is a data generated by statistically processing the data for each location based on the time factor, it may alternatively be generated for each facility, shop, area, city and town, or road.

The storage 160, for instance, stores the retrieval information for acquiring information of a predetermined point of the map information. More specifically, the retrieval information includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The memory 170 readably stores the settings that are input by the terminal input section 130, a music data and an image data as well as a plurality of calendar templates 20 as shown in FIG. 5. The memory 170 also stores various programs that run on the OS (Operating System) controlling the whole operation of the navigation device 100. The memory 170 may preferably be a CMOS (Complementary Metal-Oxide Semiconductor) memory that retains the stored data even in the case of a sudden power interruption caused by a blackout. The memory 170 may include drives or drivers for readably storing a data on a storage medium such as a HD, a DVD, and an optical disk.

The calendar template 20 is a template representing a date classification of each date. More specifically, the calendar template 20 is a table, where a plurality of table data for every month, typically twelve table data, are stored. The respective table data have a plurality of records, each containing date information about date, classification ID numbers assigned to respective dates of the date information.

The classification ID number is identical to one of the date classification IDs 11 in the traffic-congestion prediction table 10 and indicates the date classification of the date specified by the date information. For example, Friday 5th is classified as "workday" associated with "ID1", and Monday 15th is classified as "legal holiday" associated with "ID3". The classification ID number of the calendar template 20 can be modified by the processor 180 if necessary. The classification ID number is not limited to numerical values, but may alternatively be a text data (e.g. "workday") corresponding to the date classification ID in the traffic-congestion prediction table 10.

The processor 180 has various input/output ports (not shown) including a VICS receiving port connected to a VICS antenna, a GPS receiving port connected to a GPS receiver, sensor ports respectively connected to various sensors, a key input port connected to the terminal input section 130, a display control port connected to the terminal display 140, a sound control port connected to the sound output section 150, a storage port connected to the storage 160 and a memory port connected to the memory 170. As shown in FIG. 6, the processor 180 has various programs such as a current-position recognizer 181 that operates as a current-position information acquirer, a destination recognizer 182 that operates as a destination information acquirer, a guidance providing section 183 included in a notifying section, a display controller 184 also included in the notifying section, a map matching section 185, a coordinate matching section 186, a traffic-congestion recognizer 187 as a traffic information acquirer which operates as a map information acquirer and a statistical traffic information acquirer, a route processor 188 as a travel route search section that operates as a travel smoothness recognizer, an information retriever 189, a calendar modifier 190, a timer 191 and so on.

The current-position recognizer 181 recognizes the current-position of the vehicle. More specifically, it calculates a plurality of current simulated positions of the vehicle on the basis of the speed data and the azimuth data of the vehicle output respectively from the speed sensor and the azimuth sensor of the sensor 110. The current-position recognizer 181 further recognizes the current simulated coordinates values of the vehicle on the basis of the GPS data on the current-position output from the GPS receiver. Then, the current-position recognizer 181 compares the calculated current simulated positions with the recognized current simulated coordinates values, and calculates the current-position of the vehicle on a map information separately acquired so as to recognize the current-position.

The current-position recognizer 181 determines a slope angle and an altitude of a drive road on the basis of the acceleration data output from the acceleration sensor and calculates the current simulated position of the vehicle so as to recognize the current-position. Thus, the current-position of the vehicle can be accurately recognized even if the vehicle is on an intersection with an overpass or on an elevated highway where roads are overlaid in a two-dimensional view. Furthermore, when the vehicle runs on a mountain road or a slope, the current-position recognizer 181 corrects the difference between the travel distance obtained only on the basis of the speed and the direction data and the actual driving distance by using the detected slope angle of the road to accurately recognize the current-position.

The current-position recognizer 181 can recognize not only the current-position of the vehicle as described above but also a starting point, i.e. an initial point set by the terminal input section 130 as the current simulated position. Various information acquired by the current-position recognizer 181 are appropriately stored in the memory 170.

The destination recognizer 182, for instance, acquires destination information about the destination set by the input operation at the terminal input section 130 and recognizes the position of the destination. The destination information to be set includes various information for identifying a location, which might be coordinates such as latitude and longitude, addresses, telephone numbers and the like. Such destination information recognized by the destination recognizer 182 is appropriately stored in the memory 170.

The guidance providing section 183 provides guidance stored in the memory 170 in visual form by using the terminal display 140 or in audio form by using the sound output section 150 on the basis of travel route information and feature guidance information acquired in advance according to the driving status. The guidance is related to the travel of the vehicle, for instance, the contents for assisting the drive of the vehicle. For example, a predetermined arrow and a sign may be displayed on the screen of the terminal display 140, or a voice guidance such as "Turn right toward XX at the intersections of YY 700m ahead", "The vehicle is off the travel route" or "A traffic-congestion is ahead" may be provided from the sound output section 150.

The display controller 184 controls the terminal display 140 and makes the terminal display 140 display various information for notifying the user. The display controller 184 also controls to display various display screens for prompting the user to operate the terminal input section 130 so as to set various information.

The map matching section 185 performs the map matching processing for displaying the current-position recognized by the current-position recognizer 181 based on the map information obtained from the storage 160. As described earlier, the map matching section 185 typically uses the matching data MM for performing the map matching processing to modify or correct the current-position information to prevent the current-position superimposed on the map on the terminal display 140 from being located off the road in the map on the terminal display 140.

The coordinate matching section 186 performs the coordinate matching processing for determining if point information about nodes N contained in the matching data MM of the map information acquired from the storage 160 indicate an identical point or not. In other words, as described earlier, the coordinate matching section 186 acquires point information of nodes N contained in the matching data MM and reads the coordinate information of the point information. More specifically, the coordinate matching section 186 calculates the coordinate values such as the latitude and the longitude on the basis of the coordinate values of the coordinate information and the offset amount. If different nodes N have identical coordinate values, it reads the flag information of the point information of the nodes N to determine whether the nodes N represent the identical point. If the coordinate matching section 186 determines that the nodes N are identical, it recognizes that the links L respectively connected to the nodes N and contained in the different link string block information are crossed with each other, and thus considers as, for example, an intersection. If, on the other hand, the coordinate matching section 186 determines that the nodes N are not identical, it recognizes that the links L respectively connected to the nodes N and contained in the different link string block information are not crossed with each other, and thus considers as, for example, a multi-level intersection.

The traffic-congestion recognizer 187 generates current traffic-congestion information about the traffic-congestions that are currently present. More specifically, the traffic-congestion recognizer 187 appropriately acquires the VICS data from the VICS output from the VICS receiver 120. Then, it generates current traffic-congestion information about the traffic-congestions that are currently present in an area including, for example, the current-position and the destination or in a predetermined area around the current-position.

Additionally, the traffic-congestion recognizer 187 calculates the expected arrival time as an expected time to arrive at a desired destination. For example, firstly the traffic-congestion recognizer 187 calculates the expected arrival time as the expected time to arrive at the desired destination. Then based on the calculated expected arrival time, preset scheduled time, the time-series data 12i, the traffic-congestion recognizer 187 generates traffic-congestion prediction information about predictions of the traffic-congestions that may arise at any locations before arriving at the destination or at the preset scheduled time.

More specifically, the traffic-congestion recognizer 187 recognizes the classification ID number of the date for which traffic-congestion prediction will be performed on the basis of the time information acquired from the timer 191 and the calendar template 20. Then, the traffic-congestion recognizer 187 retrieves and acquires the time-series data 12i for the area corresponding to the recognized classification ID number and including the current-position and the destination from the traffic-congestion prediction table 10. After that, based on the current traffic-congestion information and the current time information acquired from the timer 191, the traffic-congestion recognizer 187 calculates the expected arrival time to arrive at a desired location on a candidate travel route specified by candidate travel route information (which will be described later) generated by the route processor 188.

The expected arrival time may be calculated with a method below, for example. Firstly, the distance to a desired location on the candidate travel route is recognized based on the candidate travel route information, and the time required to travel the recognized distance is calculated based on the current traffic-congestion information. Subsequently, the expected arrival time is calculated on the basis of the calculated required time and the current time. Then, traffic-congestion prediction information is generated on the basis of the time-series data 12i and the expected arrival time.

The route processor 188 searches for a travel route by computing the driving route of the vehicle on the basis of the setting information that is set by a user for setting the route as well as the map information stored in the storage 160. The route processor 188 can compute the travel route by taking the current traffic-congestion information and the traffic-congestion prediction information generated by the traffic-congestion recognizer 187 into consideration when the processor 180 recognizes traffic-congestion prediction request information requesting a travel route search with the traffic-congestion information and the traffic-congestion prediction considered.

More specifically, if the setting information does not contain the traffic-congestion prediction request information, the route processor 188 acquires the current-position, the destination, the setting information and the current traffic-congestion information. Then, based on the acquired information, the route processor 188 searches for available roads, where for example traffic is allowed, using the route search map information of the map information, and generates travel route information for setting a route with a shorter required time, a route with a shorter distance, or a route without traffic-congestions and traffic controls. After that, it determines the time required to arrive at the destination for each of the routes contained in the travel route information and generates required time information about the required time.

If, on the other hand, the setting information contains the traffic-congestion prediction request information, the route processor 188 acquires the current-position, the destination, the setting information and the current traffic-congestion information. Then, based on the acquired information, it generates candidate travel route information for setting a route with shorter travel time, a route with shorter travel distance, or a candidate route without traffic-congestions and traffic controls. After that, it acquires the current traffic-congestion information and the traffic-congestion prediction information and reduces the number of the candidate route contained in the candidate travel route information based on the acquired information, and thus generates travel route information for setting a route etc.

Upon the generation of the travel route information with the use of the traffic-congestion prediction information, if, for example, there are a plurality of roads R1, R2 and R3 having a common branching point and a common meeting point on a route from a starting point S to destination G as shown in Fig. 7, the time required for passing through the respective roads R1, R2 and R3 is calculated. The required time is computed using the information from the sensor 110 and the map information etc. More specifically, the route processor 188 computes the miles to be driven during a predetermined time period based on the information about the legal speed contained in the map information, and computes the drive time from the branching point to the meeting point using the matching data MM of the map information based on the computed miles to be driven. Then, the route processor 188 generates estimated required time information and stores the information in the memory 170. The route processor 188 further generates weighting information, which indicates the priority used to select the route, for each road. That is, it computes such percentage that gives a route with shorter required time higher chances to be selected. The weighting information is generated with a computation of Weighting P = 1 - {(Estimated required time of a road) / (Total estimated required time of respective roads)}.

Specifically, if the estimated required time for three roads R1, R2 and R3 are TR1, TR2 and TR3, the weighting PR1, PR2 and PR3 of the respective roads R1, R2 and R3 are as follows.

$$PR1 = 1 - \{TR1 / (TR1 + TR2 + TR3)\}$$

$$PR2 = 1 - \{TR2 / (TR1 + TR2 + TR3)\}$$

$$PR3 = 1 - \{TR3 / (TR1 + TR2 + TR3)\}$$

If the weighting is equal to or less than a predetermined threshold, the route processor 188 reallocates that weighting in accordance with the percentage of other weightings. For example, if the threshold is preset to 10% and PR1, PR2 and PR3 are respectively 50%, 40% and 10%, the route processor 188 reallocates the 10% of the PR3 so that PR1, PR2 and PR3 respectively become 55.56%, 44.44% and 0% based on the proportion of 50 : 40 = 55.56 : 44.44, and appropriately stores the weighting information in the memory 170. Then, the route processor 188 selects the any one of the roads R1, R2 and R3 between the branching point and the meeting point based on the weighting information and generates travel route information. Also, the route processor 188 calculates the time required to arrive at the destination through each route, and generates required time information about the required time. Alternatively, the original computation result without setting a threshold may be used as the weighting information.

At the step for searching for the travel route, the route processor 188 might use the matching data MM of the map information in addition to the route search map information. This applies to, for instance, the case where the route processor 188 searches for the travel route including a narrow road such as a back street not contained in the route search map information. When the matching data MM is used, the route is appropriately searched according to the road arrangement recognized by the coordinate matching section 186. The travel route information includes, for example, the route guidance information for navigating the vehicle during the drive thereof drive for assisting the drive. The route guidance information may be appropriately displayed on the terminal display 140 or output as sounds from the sound output section 150 to assist the drive.

The information retriever 189 hierarchically retrieves and acquires the retrieval information, such as shops and facilities, stored in the storage 160 on the basis of the item information in response to, for example, a retrieval request for the retrieval information set at the terminal input section 130.

The calendar modifier 190 appropriately updates the calendar template 20 stored in the memory 170 on the basis of modifications set by the user. More specifically, the calendar modifier 190 recognizes various information set by the input operations of the user at the terminal input section 130. The set information may include date information for specifying date and event information about events such as festivals and sports meeting. Then, the calendar modifier 190 recognizes the date specified by the date information, and also recognizes the classification ID number associated with the event information. The classification ID number may be typically recognized as follows. The date classification is determined based on the set event information, and the classification ID number is recognized based on the determined date classification. If, for example, the event information relates to a sports meeting to be held at Athletic Ground B, the date classification is determined as "special day 2", and the classification ID number is recognized as "ID5" based on the "special day 2". If the event information relates to the last day of five consecutive holidays, the date classification is recognized as "the last day of a long holiday", and then the classification ID number as "ID 10" based on the "last day of a long holiday". Then, the calendar modifier 190 appropriately updates the calendar template 20 on the basis of the recognized date and the classification ID number.

The timer 191 recognizes the current time typically based on the reference pulse of an internal clock. Then, the timer 191 appropriately outputs time information about the recognized current time.

[Operation of Navigation Device]

Now, the operation of the navigation device 100 will be described with reference to the drawings.

(Processing for Modifying Calendar Template)

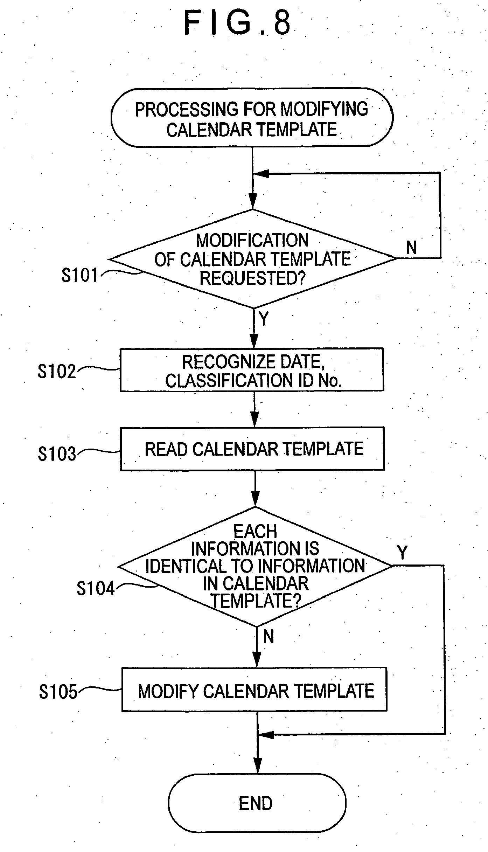

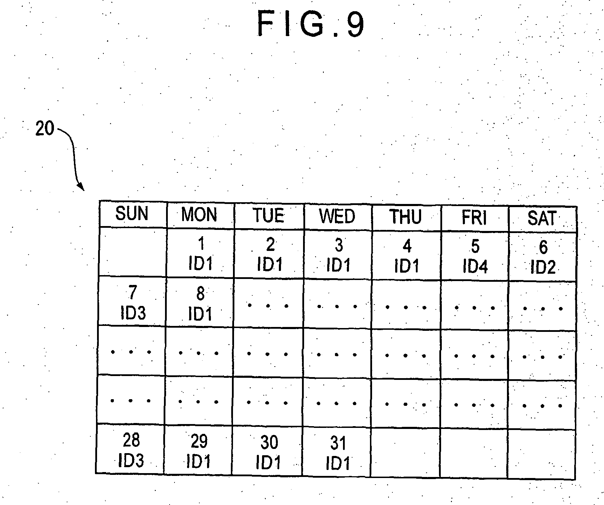

Firstly, the processing for modifying the calendar template 20 as one of the operations of the navigation device 100 will be described with reference to FIGS. 8 and 9. Described herein is the processing for modifying the calendar template 20 as shown in FIG. 5 based on the information about, for example a festival scheduled on 5th in City A, that a user have recognized from the radio or TV broadcastings, printed information sources such as newspapers and official publications or acquired by connecting his or her mobile phone via the mobile phone line. FIG. 8 is a flowchart showing the processing for modifying a calendar template. FIG. 9 is a conceptual illustration schematically showing the table structure for the data in the calendar template updated by the calendar template modifier.

Firstly, the user in the vehicle switches on the navigation device 100 to supply the power thereto. When the power is supplied, the processor 180 controls the terminal display 140 to display a main menu and a screen for prompting the user to set a specific operation to be executed by the navigation device 100.

Then, as shown in FIG. 8, the user operates the terminal input section 130 to set a command for modifying the calendar template 20. When the processor 180 recognizes the set command for modifying the calendar template 20 at the calendar modifier 190 (Step S 101), it makes the terminal display 140 display a screen for prompting the user to set the date information and the event information necessary for modifying the calendar template 20

When the user sets the date information and the event information by operating the terminal input section 130 following the instructions on the displayed screen, the calendar modifier 190 acquires the set date information and the event information. The user may set the date information and the event information by inputting characters thereof or selecting from a plurality of candidates displayed on the terminal display 140. Alternatively, a following method may be used. Firstly, the user selects a date by operating the terminal input section 130 and moving a flashing cursor displayed in or around the area of a date in the calendar template 20 as shown in FIG. 5. Then, the user sets the event information of the selected date by inputting characters or by selecting from a plurality of event information being displayed.

After acquiring the date information and the event information, the calendar modifier 190 recognizes the acquired various information (Step S102). More specifically, the calendar modifier 190 recognizes the date specified by the date information and the classification ID number associated with the event information. In this example, the calendar modifier 190 recognizes the date specified by the date information as 5th. Also, it determines the date classification associated with the event information as "special day 1" for a festival to be held in City A, and recognizes the classification ID number as "ID4" based on the determined date classification.

Thereafter, the calendar modifier 190 reads out the calendar template 20 stored in the memory 170 (Step S103). Then, the calendar modifier 190 determines if the information recognized in the Step S102 is identical to the information in the calendar template 20 read in the Step S 103 or not (Step S104). More specifically, it recognizes the classification ID number associated with the date recognized in the step S 102 based on the read calendar template 20. Then, it determines if the classification ID number recognized based on the calendar template 20 is identical to the classification ID number recognized in the Step S102 or not.

If the calendar modifier 190 determines in the Step S104 that the classification ID numbers are identical, it ends the processing without modifying the calendar template 20. If, on the other hand, the calendar modifier 190 determines that the classification ID numbers are not identical, it modifies the calendar template 20 on the basis of the various information recognized in the Step S102 (Step S105) and ends the processing. More specifically, since the classification ID number of the 5th recognized in the Step S102 is "ID4" and the classification ID number of the 5th recognized based on the calendar template 20 is "ID1", the calendar modifier 190 changes the classification ID number of the 5th from "ID1" to "ID4" as shown in FIG. 9 and ends the processing.

(Processing for Travel Route Search)

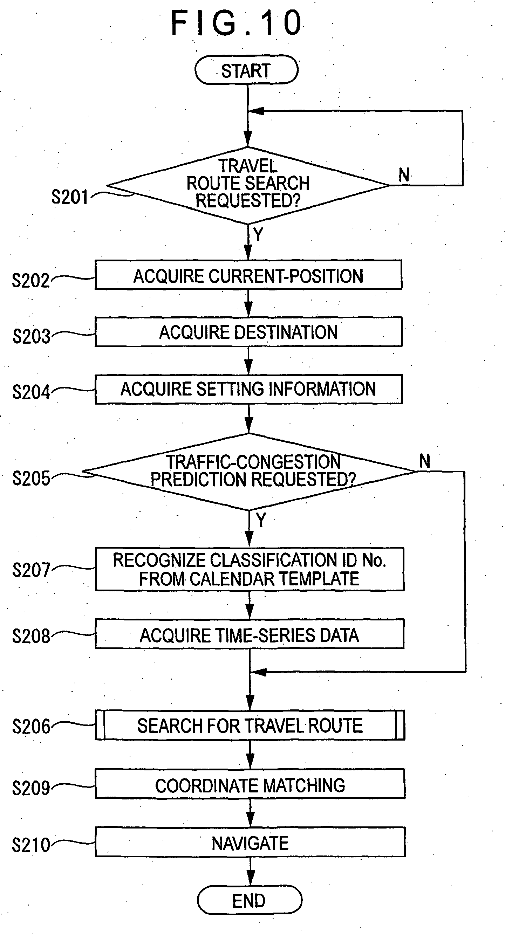

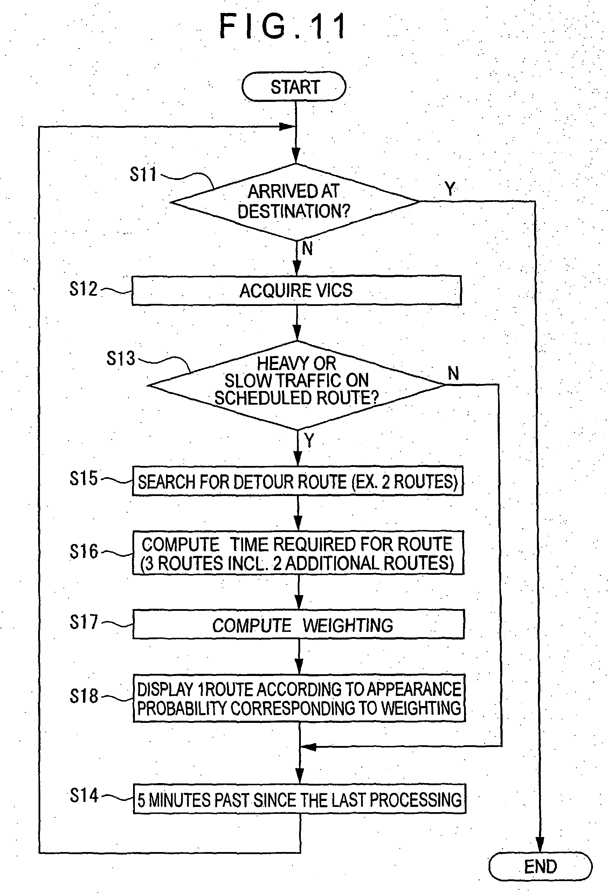

Now, the processing for travel route search as one of the operations of the navigation device 100 will be described with reference to FIGS. 10 and 11. Although the weighting information is generated in the rerouting step to execute the processing for equalizing the traffic-congestion conditions in the processing for travel route search, the weighting information may be used only in the travel route setting step, or in both the travel route setting step and the reroute search step. FIG. 10 is a flowchart showing the processing for travel route search in the navigation device. FIG. 11 is a flowchart showing the reroute search processing for reroute search.

Firstly, as shown in FIG. 10, the user operates the terminal input section 130 to set a command for searching for a travel route. When the processor 180 recognizes the set command for searching for a travel route (Step S201), the processor 180 makes the terminal display 140 display a screen for prompting the user to set various information necessary for travel route search such as the destination, the setting information about the preference for shortest travel distance or shortest travel time and necessity of the traffic-congestion prediction.

When the processor 180 recognizes the various information necessary for the travel route search, the current-position recognizer 181 recognizes the current-position (Step S202) and the destination recognizer 182 recognizes the set destination (Step S203). Specifically, the current-position recognizer 181 calculates the current-position of the vehicle on the basis of the speed data and the azimuth data of the vehicle respectively output from the speed sensor and the azimuth sensor of the sensor 110 and the GPS data about the current-position output from the GPS receiver, and acquires the current-position information. The acquired current-position information is appropriately stored in the memory 170.

The processor 180 controls the terminal display 140 to display a screen for prompting the user to set the destination with the input operation at the terminal input section 130. Then, when the user sets the destination by operating the terminal input section 130 following the instructions on the displayed screen, the destination recognizer 182 acquires the destination information about the set destination. The acquired destination information is appropriately stored in the memory 170.

If the user requests to acquire point information about a point of the destination in the step of inputting the destination by operating the terminal input section 130, the user operates the terminal input section 130 so as to request the retrieval information of the point following the instructions on the screed displayed on the terminal display 140. In response to the retrieval request for the retrieval information of the point, the processor 180 makes the information retriever 189 hierarchically retrieve the retrieval information about the destination from the mesh information at the lower layers for each area, typically using the map information MP and acquire the retrieval information associated with the point of the destination from the storage 160. Then, the processor 180 controls the terminal display 140 to display the acquired retrieval information.

If the retrieval information requires to display map information of a predetermined area containing the destination or if the user who have recognized the retrieval information operates the terminal input section 130 to display a predetermined area, the processor 180 appropriately controls the terminal display 140 to display the display mesh information VMx for the corresponding area. After the desired map information is displayed on the terminal display 140 in this way, the user identifies the destination by appropriately specifying the point of the destination with the input operation at the terminal input section 130, for example, by moving the cursor displayed on the map on the screen. When the point information is specified in this way, the destination recognizer 182 of the processor 180 recognizes the point information of the destination as the destination information and stores it in the memory 170.

The processor 180 controls the terminal display 140 to display a screen for prompting the user to input the settings, i.e., criteria for the travel route search. When the user inputs the settings by operating the terminal input section 130 following the instruction on the displayed screen, the processor 180 acquires the setting information about the settings that have been input (Step S204). The acquired setting information is appropriately stored in the memory 170.

Thereafter, the route processor 188 of the processor 180 acquires the setting information stored in the memory 170 and determines if the acquired setting information contains the traffic-congestion prediction request information or not (Step S205).

If the route processor 188 of the processor 180 determines in the Step S205 that the traffic-congestion prediction request information is not contained, the traffic-congestion recognizer 187 acquires the VICS data output from the VICS receiver 120. Then, the processor 180 generates current traffic-congestion information of an area containing the current-position and the destination based on the acquired VICS data. The generated current traffic-congestion information is appropriately stored in the memory 170.

Then, the route processor 188 of the processor 180 acquires the current-position information, the destination information, the setting information and the current traffic-congestion information from the memory 170. Based on the acquired various information, it performs a route search processing to search for the travel route from the current-position of the vehicle to the destination, using the route search map information and the matching data MM contained in the map information stored in the storage 160 (Step S206).

For example, when searching for a major street of which data is stored and managed in the route search map information, the route is searched using the route search map information. On the other hand, when searching for a minor street of which data is not stored in the route search map information, the route from a minor street to a major street is searched using the matching data MM. While the route is searched using the matching data MM, the coordinate matching section 186 determines whether a plurality of nodes N indicate the identical point or not to recognize the road arrangement based on the relations between links L.

The route processor 188 detects a plurality of travel routes and selects some of the travel routes based on the acquired setting information and the current traffic-congestion information to generate the travel route information about, for instance, five candidate travel routes that meet the requirements of the user. In the step for selecting the travel route, the route processor 188 might generate weighting information and set the weighting, or recommendation ranking, of a plurality of candidate travel routes based on the weighting information so as to notify it visually on the terminal display 140.

If, on the other hand, the route processor 188 determines in the Step S205 that the traffic-congestion prediction request information is contained, the processor 180 acquires the time information from the timer 191 and recognizes the current date based on the acquired time information. Then, it acquires the calendar template 20 from the memory 170, and then retrieves and recognizes the classification ID number of the recognized date based on the acquired calendar template 20 (Step S207). It also acquires the current-position information and the destination information stored in the memory 170 and recognizes the current-position and the destination. Then, the traffic-congestion recognizer 187 retrieves and acquires the time-series data 12i corresponding to the recognized classification ID number and containing the current-position and the destination from the traffic-congestion prediction table 10 stored in the storage 160 (Step S208).

Thereafter, the processor 180 performs the processing of the Step S206. More specifically, the processor 180 generates current traffic-congestion information at the traffic-congestion recognizer 187 and appropriately stores it in the memory 170. Then, the route processor 188 of the processor 180 acquires the current-position information, the destination information and the setting information from the memory 170. Based on the acquired various information, the route processor 188 detects a plurality of travel routes and selects some of the travel routes on the basis of the acquired setting information to generate candidate travel route information about a plurality of candidate travel routes that meet the requirements of the user.

Thereafter, the traffic-congestion recognizer 187 of the processor 180 acquires the current traffic-congestion information from the memory 170 and the current time and day from the timer 191. Then, based on the acquired current traffic-congestion information and the current time and day, the traffic-congestion recognizer 187 estimates the expected arrival time to arrive at a desired location on each of the candidate travel routes contained in the candidate travel route information generated by the route processor 188. Then, the traffic-congestion recognizer 187 predicts the condition of the traffic-congestion at the desired location on each of the candidate travel routes at the expected arrival time on the basis of the time-series data 12i acquired in the Step S208 and generates traffic-congestion prediction information about the predicted condition of the traffic-congestion.

Based on the current traffic-congestion information and the traffic-congestion prediction information, the route processor 188 of the processor 180 performs the route setting processing of the Step S206 for travel route selection so as to select some of the candidate travel routes contained in the candidate travel route information. In the route setting processing, the travel routes may be selected base only on the traffic-congestion prediction information. Then, the route processor 188 estimates the time required to arrive at the destination for each of the selected travel routes to generate required time information, and the display controller 184 makes the terminal display 140 display the computed candidate travel routes and a screen for prompting the user to select a travel route. The user selects and inputs the travel route information about any one of the route, and thus the travel is set. If only one route is set, that route is set as the travel route without displaying the instruction to demand the selection.

Thereafter, the processor 180 acquires the matching data MM from the storage 160. Then, the coordinate matching section 186 performs a coordinate matching processing on the acquired matching data MM (Step S209) for recognizing the arrangement of roads, or the connection of roads, and the memory 170 stores it. Then, under the control of the display controller 184 of the processor 180, the terminal display 140 superimposes an icon indicating the current-position of the vehicle on the basis of the current-position information as well as the travel route information selected by the user, the traffic-congestion prediction information, the required time information and the current traffic-congestion information on the acquired map information, and the sound output section 150 appropriately outputs sounds for navigating the user (Step S210)

Subsequently, the processor 180 recognizes the travel progress of the vehicle based on the data output from the speed sensor, the azimuth sensor and the acceleration sensor of the sensor 110 and the GPS data output from the GPS receiver. Then, the guidance providing section 183 of the processor 180 performs the processing of the of Step S210. Specifically, it provides the guidance information for guiding the travel of the vehicle in visual or audio form on the basis of the recognized travel progress and the route guidance information contained in the travel route information.

More specifically, the display controller 184 of the processor 180 interconnects the nodes N in the matching mesh information MMx acquired from the storage 160 with a polyline and performs a polyline processing on the basis of the arrangement of roads described in the link string block information of the matching data MM so as to display the roads in the area of the matching mesh information MMx containing the travel route on the terminal display 140. Then, under the control of the display controller 184, the terminal display 140 superimposes the name information VMxA and the background information VMxC that are miscellaneous element data about the elements of the map excluding roads in the area corresponding to the matching mesh information MMx of the display mesh information VMx acquired from the storage 160. Then, the current-position is superimposed on the displayed map.

In the step of superimposing the current-position, the map matching processing is performed on the basis of the matching data MM to prevent an indicator representing the current-position information of the vehicle from being located off the displayed road. Namely, the processor 180 appropriately corrects the current-position information to locate the displayed current-position on the matching data MM for the travel route. Thus the current-position is displayed on the link string connecting links L. In this way, the current-position is superimposed on the map for providing the navigation. When the current-position reaches the predetermined position, guidance on the travel direction and the like are provided in visual or audio form. While the coordinate matching processing is performed at the time of acquiring the matching data MM in the Step S209 in the above description, the coordinate matching processing operation may alternatively be performed at the time of or before performing the map matching processing.

When the terminal input section 130 is operated to display a map of other areas, the map will be displayed based on the display mesh information VMx acquired from the storage 160 as in the case of the display operation based on the retrieval.

While the vehicle is traveling, the traffic-congestion recognizer 187 of the processor 180 acquires the VICS data about traffic-congestions, traffic accidents, constructions, traffic controls and weather information. Then, if travel status of the vehicle might be affected or a route change might be required according to the VICS data and the weather information acquired by the traffic-congestion recognizer 187, the processor 180 performs the processing for travel route search again. In other words, the processor 180 performs a reroute processing. The guidance providing section 183 of the processor 180 provides a guidance or notification about the affection.

Specifically, the reroute search is performed as shown in FIG. 11. While the vehicle is traveling after the travel route is set in the Step S206, the guidance providing section 183, for example, determines whether the vehicle has arrived at the destination (Step S11). More specifically, the guidance providing section 183 determines whether the current-position recognized by the current-position recognizer 181 and the destination recognized by the destination recognizer 182 are located at a same position. If it determines that the vehicle arrives at the destination, it ends the navigation. If, on the other hand, it determines that the vehicle has not yet arrived at the destination in the Step S11, the traffic-congestion recognizer 187 controls the VICS receiver 120 to acquire the VICS data (Step S12). The traffic-congestion recognizer 187 determines whether there is a congested or slow traffic on the travel route that is set and used for the navigation (Step S13).

If the traffic-congestion recognizer 187 determines that there is no congested or slow traffic in the Step S 13, it keeps the set travel route for 5 minutes after the last acquisition of the VICS data (Step S14) and the operation returns to the Step S12. If, on the other hand, the traffic-congestion recognizer 187 determines that there is a congested or heavy traffic on the travel route in the Step S13, the route processor 188 searches for a detour route for detouring, which may be a road having a common branching point and a common meeting point with the route with the congested or slow traffic (Step S 15). The route processor 188 computes the required time for the road with the congested traffic on the current travel route and the road on the detour travel route (Step S16), and computes the weighting for the respective roads to generate the weighting information (Step S 17). The route processor 188 selects a travel route including a road according to the appearance probability corresponding to the weighting and generates travel route information. Under the control of the display controller 184, the terminal display 140 displays the generated travel route information for notifying it to the user. At the step of notification, if a travel route containing other roads, the guidance for recommending a detour may be provided. If, on the other hand, the selected road is identical to the last travel route, the guidance for recommending to keep the same route is provided. Then the operation continues to the Step S 14 and repeats the processing.

[Advantages of First Embodiment]

According to the first embodiment as described earlier, based on the current-position information about the current-position of the vehicle recognized by the current-position recognizer 181, the destination information about the position of the destination for the vehicle to travel recognized by the destination recognizer 182, and the traffic information such as the current traffic-congestion information and the traffic-congestion prediction information about the traffic condition for the vehicle recognized by the traffic-congestion recognizer 187, the route processor 188 searches for a plurality of candidate travel routes for the vehicle and provides them for the navigation by displaying them on the terminal display 140. If the traffic-congestion recognizer 187 recognizes that there is a congested or slow traffic which might affect the travel smoothness of the vehicle on the travel route used for the navigation, it computes the travel smoothness, or the required time, of the travel route and other detour travel routes. Then it computes the weighting, or the appearance probability of the respective travel routes based on the required time to generate the weighting information, and selects and displays any one of the travel routes on the terminal display 140. Accordingly, since the navigation devices 100 installed on vehicles traveling in a same zone perform similar processing and allocate the respective vehicles to each travel route based on the appearance provability, the required time on each travel route is equalized, and thus preventing a heavy traffic-congestion from being focused only on certain roads and realizing stable traffic conditions. Therefore, the navigation for a smooth travel for vehicles can be easily provided.

And the required time for the vehicle to travel is estimated as the travel smoothness, and the appearance probability of the travel route to be notified is set according to the weighting such that shorter required time has higher percentage. Therefore, the simple configuration for realizing stable traffic condition can be easily obtained.

As the weighting information, the percentage is so computed that the travel routes with shorter travel time have higher chances to be selected based on the share of the each route in the total required time of the respective travel routes. Accordingly, the configuration for realizing stable traffic condition can be obtained with a simple computation, and user-friendliness is improved by quick notification due to the reduction of processing load, the simplification of the configuration and the improvement of the processing speed.

When the value of the percentage in the weighting information is equal to or less than a predetermined threshold, the selection and notification of the travel route assigned with that percentage is prohibited. That is, the value of the percentage thereof is set to 0. Therefore, the travel routes requiring comparatively longer time are not notified and hence occupants such as drivers driving vehicles and passengers can be smoothly navigated without being irritated by the slow travel route.

The percentage value equal to or less than the predetermined threshold is given depending to the proportion of the percentage value of other travel routes in percentage value thereof. Therefore, the chances to be selected would not be changed even when the required time becomes shorter, and hence the travel route enabling a good navigation can be easily searched.

The traffic-congestion prediction information is generated using the traffic-congestion prediction table 10 containing the statistical traffic information obtained by statistically processing traffic conditions in the past. Therefore, the processing load is lower than that for predicting the traffic-congestion using a special simulation program, and hence the traffic-congestion prediction for every predetermined time can be quickly computed. In other words, the transition of the traffic-congestion can be quickly notified based on the traffic-congestion prediction, thereby easily providing the effective navigation.

The calendar template 20 is provided so that the traffic-congestion prediction table 10 is associated with the dates in the calendar template 20. In other words, the changeable classification ID number corresponding to the date classification ID 11 contained in the traffic-congestion prediction table 10 is associated with the date information about the date of the calendar. Accordingly, the traffic-congestions can be properly predicted using the traffic-congestion prediction table 10 containing the past data, thereby providing effective navigation. The date of the calendar template 20 is associated with the changeable classification ID number related to the traffic-congestion prediction table. Therefore, if the predicted traffic condition and the actual traffic condition have discrepancies, it is only necessary to change the classification ID number corresponding to the time-series data contained in the traffic-congestion prediction table corresponding to the actual situation, thereby properly predicting the traffic-congestion.

[Second Embodiment]

Now, a second embodiment of the present invention will be described with reference to the attached drawings. A communication navigation system of this embodiment is an example of a guiding system of the present invention, and so designed to navigate a movable body (e.g. a vehicle) for the travel or drive thereof. As in the case of the first embodiment, the guiding system of the present invention is not necessarily designed to navigate a vehicle for the drive thereof, but may be so designed to notify traffic information regarding any types of movable body.

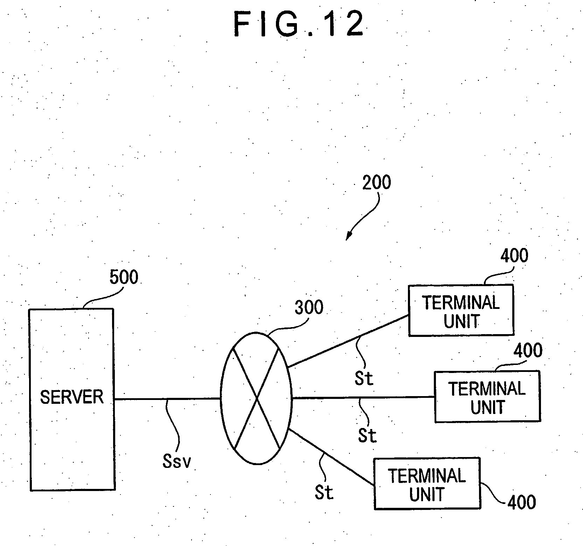

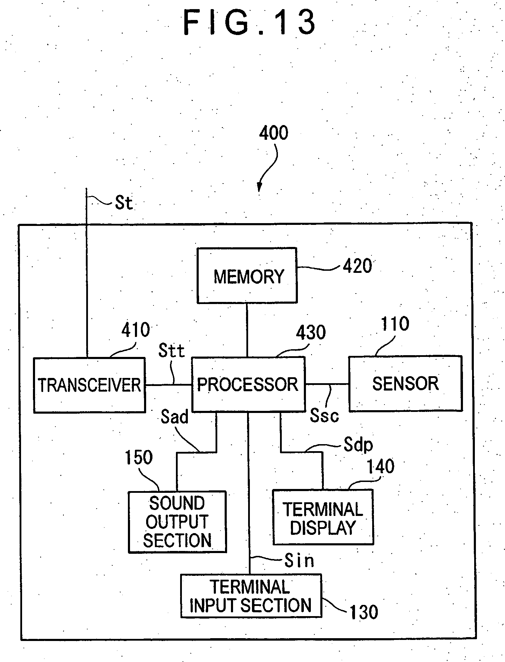

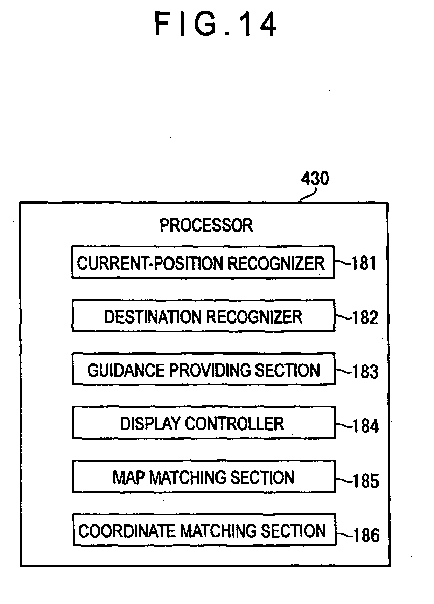

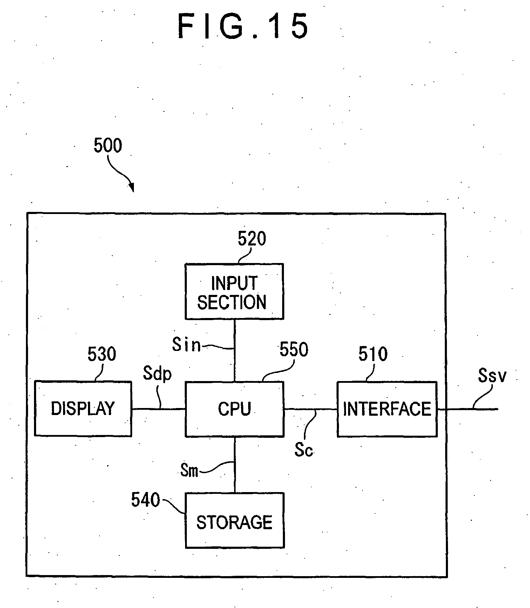

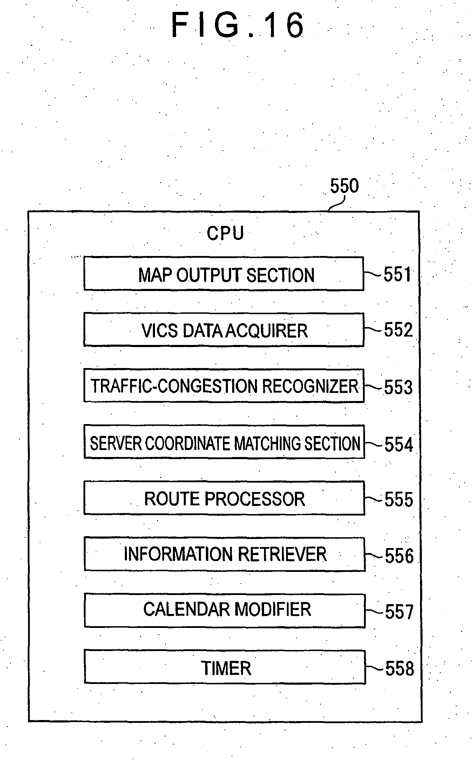

Fig. 12 is a schematic block diagram showing a configuration of the navigation system according to the present embodiment. Fig. 13 is a schematic block diagram showing a configuration of a terminal unit. FIG. 14 is a schematic block diagram showing a configuration of a processor of the terminal unit. Fig. 15 is a block diagram schematically showing a configuration of a server. FIG. 16 is a schematic block diagram showing a CPU of the server. The components same as those in the first embodiment are denoted respectively by the same reference symbols and will not be described any further.

[Configuration of Navigation System]

Referring to FIG. 12, the reference numeral 200 denotes the communication navigation system (guiding system). The navigation system 200 notifies guidance on a travel along with a travel progress of a movable body (e.g. a vehicle). The movable body is not limited to a vehicle, but includes any types of movable body such as an aircraft and a ship. The navigation system 200 has a network 300, a terminal unit 400 that operates as a guiding device, and a server 500.

The network 300 is connected to the terminal unit 400 and the server 500. The network 300 interconnects the terminal unit 400 and the server 500 to enable the communication therebetween. The network 300 may be Internet based on a general-purpose protocol such as TCP/IP protocol, an intranet, a LAN (Local Area Network), a communication network and a broadcasting network that have a plurality of base stations capable of communicating by way of a radio medium, or the radio medium itself that enables direct communication between the terminal unit 400 and the server 500. The radio medium may be any one of electric waves, light beams, acoustic waves and electromagnetic waves.

Like the navigation device 100 of the first embodiment, the terminal unit 400 may be, for example, an in-vehicle unit installed in a vehicle as a movable body, a portable unit, a PDA (Personal Digital Assistant), a mobile phone, a PHS (Personal Handyphone System) or a portable personal computer. The terminal unit 400 acquires map information delivered by the server 500 over the network 300. On the basis of the map information, the terminal unit 400 searches for and displays information about a current-position and a destination, a route to the destination, predetermined shops nearby, and information about services offered by the shops. As shown in FIG. 13, the terminal unit 400 includes a transceiver 410 that operates as a terminal communication section, a sensor 110, a terminal input section 130, a terminal display 140, a sound output section 150, a memory 420, a processor 430 and so on.

The transceiver 410 is connected to the server 500 over the network 300, and also connected to the processor 430. The transceiver 410 can receive a terminal signal St from the server 500 over the network 300. When acquiring the terminal signal St, the transceiver 410 performs a preset input interface processing so as to output the terminal signal St as a processing terminal signal Stt to the processor 430. The transceiver 410 can also input the processing terminal signal Stt from the processor 430. When acquiring the processing terminal signal Stt to be input, the transceiver 410 performs a preset output interface processing so as to send the processing terminal signal Stt as the terminal signal St to the server 500 over the network 300.

The sensor 110 detects the travel progress of the vehicle, or the current-position and the driving status, and outputs it as a predetermined signal Ssc to the processor 430.

The terminal input section 130 has various operation buttons and operation knobs (not shown) to be used for input operations. The operation buttons and the operation knobs are used to input, for example, the settings for the operations of the terminal unit 400. More specifically, they may be used: to issue an instruction for executing a communication operation as an communication request information for acquiring information over the network 300; to set the type of information to be acquired and acquiring criteria; to set a destination; to retrieve information; and to display the driving status (travel progress) of the vehicle. When the settings are input, the terminal input section 130 outputs a predetermined signal Sin to the processor 430 so as to apply the settings.

The terminal display 140, under the control of the processor 430, displays a signal Sdp representing an image data sent from the processor 430. The image data may be an image data of the map information the and the retrieval information sent from the server 500.

The sound output section 150, under the control of the processor 430, outputs and notifies various signals Sad as sounds from an audio section. The various signals Sad represent the sound data etc. from the processor 430.

The memory 420 appropriately stores various information acquired over the network 300, the settings that are input by the terminal input section 130, a music data, an image data and the like. The memory 420 also stores various programs that run on the OS (Operating System) controlling the whole operation of the terminal unit 400. The memory 420 may include drives or drivers for readably storing a data on a storage medium such as a HD (Hard Disk) or an optical disk.

The processor 430 has various input/output ports (not shown) including a communication port connected to the transceiver 410, a GPS receiving port connected to a GPS receiver of the sensor 110, sensor ports respectively connected to various sensors of the sensor 110, a key input port connected to the terminal input section 130, a display control port connected to the terminal display 140, a sound control port connected to the sound output section 150 and a storage port connected to the memory 420. As shown in FIG. 14, the processor 430 has various programs such as a current-position recognizer 181 that operates as a current-position information acquirer, a destination recognizer 182 that operates as a destination information acquirer, a guidance providing section 183, a display controller 184, a map matching section 185, a coordinate matching section 186 and so on.

The current-position recognizer 181 recognizes the current-position of the vehicle. Various information acquired by the current-position recognizer 181 are appropriately stored in the memory 420.

The destination recognizer 182, for instance, acquires the destination information about the destination set by the input operation at the terminal input section 130 and recognizes the position of the destination. Such destination information recognized by the destination recognizer 182 is appropriately stored in the memory 420.

The guidance providing section 183 provides guidance stored in the memory 420 on the basis of travel route information and feature guidance information acquired in advance according to the driving status. The guidance is related to the travel of the vehicle, for instance, the contents for assisting the drive of the vehicle.

The map matching section 185 performs the map matching processing for displaying the current-position recognized by the current-position recognizer 181 based on the map information obtained from the server 500.

The coordinate matching section 186 performs the coordinate matching processing for determining if point information about nodes N contained in the matching data MM of the map information acquired from the server 500 indicate an identical point or not.

The server 500 can communicate with the terminal unit 400 over the network 300. The server 500 is capable of acquiring various information from other servers (not shown) of various government offices such as Meteorological Agency and National Police Agency, private organizations, VICS and business enterprises over the network 300. The information to be acquired may be travel information for the vehicle, i.e., various travel related information used during the travel of the vehicle such as weather information, VICS data including traffic-congestions, traffic accidents, constructions, traffic controls, and shop information about various shops including gasoline stations and restaurants etc. As shown in FIG. 15, the server 500 includes an interface 510 that operates as a current-position information acquirer and a destination information acquirer, an input section 520, a display 530, a storage 540, a CPU (Central Processing Unit) 550 and so on.

The interface 510 performs a preset input interface processing over a server signal Ssv input via the network 300 so as to output the server signal Ssv as a processing server signal Sc to the CPU 550. When the processing server signal Sc to be sent from the CPU 550 to the terminal unit 400 is input in the interface 510, the interface 510 performs preset output interface processing over the input processing server signal Sc so as to output the processing server signal Sc as a server signal Ssv to the terminal unit 400 over the network 300. Note that the server signal Ssv can be appropriately output only to a predetermined terminal unit 400 on the basis of the information described in the processing server signal Sc.

Like the terminal input section 130, the input section 520, which may be a keyboard, a mouse or the like, has various operation buttons and operation knobs (not shown) to be used for input operations. The operation buttons and the operation knobs are used: to input the settings for operations of the server 500; to set information to be stored in the storage 540; and to update the information stored in the storage 540. When the settings are input, the input section 520 outputs a signal Sin corresponding to the setting to the CPU 550 so as to apply the settings. In place of the operation buttons and the operation knobs, the input section 520 may include a touch panel that may be arranged at the display 530 for input operations and a sound input section for the input operations thereof as long as various settings can be input.

The display 530, just like the terminal display 140, displays a signal Sdp representing an image data sent from the CPU 550 under the control of the CPU 550. The image data may be those acquired from the storage 540 and those acquired from external servers over the network 300.

The storage 540 readably stores various information received from the terminal unit 400 and external servers such map information as shown in FIGS. 2 and 3 and a traffic-congestion prediction table 10 as shown in FIG. 4. The storage 540 also readably stores the calendar template 20 associated with the terminal units 400 connected to the server 500 over the network 300 as shown in FIG. 5. More specifically, although not shown, the storage 540 has various information storage areas for storing various information, a map information storage area that operates as a map information storage for storing map information, a traffic-congestion prediction table storage area that operates as a statistical traffic information storage for storing the traffic-congestion prediction table 10 and a calendar storage area for storing the calendar template 20.

While the storage 540 has the above-mentioned four storage areas in this embodiment, the storage 540 may not have any of the above-mentioned storage areas, or may have additional storage areas. The storage 540 may include drives or drivers for readably storing a data on storage medium such as a HD (Hard disks), a DVD (Digital Versatile Disk), an optical disks and a memory card. Information to be stored may include, for example, information input by the input operation at the input section 520, and the contents of the information stored with the input operation can be appropriately updated. The storage 540 also stores information such as various programs that run on an OS (Operating System) controlling the whole operation of the server 500 and the navigation system 200.

The storage 540, for instance, stores the retrieval information for acquiring information of a predetermined point in the map information. More specifically, the retrieval information provided upon the retrieval request from the terminal unit 400 includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The storage 540 stores personal information about users who use the navigation system 200 with the terminal unit 400. The personal information may include a name and an address, a user ID number and a password assigned to each user, a type of the terminal unit 400 for the use of the navigation system 200, and an address number of the terminal unit 400 used for communicating with the terminal unit 400. Furthermore, the storage 540 stores various information used for performing the navigation processing in a manner readable by the CPU 550.

As shown in FIG. 16, the CPU 550 has various programs stored in the storage 540 such as a map output section 551, a VICS data acquirer 552 that operates as a traffic information acquirer, a traffic-congestion recognizer 553 that operates also as a traffic condition transition recognizer, a server coordinate matching section 554, a route processor 555 as a travel route searching section that also operate as a map information retriever and a travel smoothness recognizer, an information retriever 556, a calendar modifier 557, a timer 558 and so on.

The map output section 551 responds to the input of the processing server signal Sc to refer to the information requesting a delivery of the information about the map information contained in the processing server signal Sc, and retrieves the requested information from the map information stored in the storage 540, e.g., the display data VM and matching data MM corresponding to a predetermined area to read it out as the memory signal Sm. The map output section 551 appropriately converts the read memory signal Sm into a processing server signal Sc, outputs the processing server signal Sc to predetermined or all terminal units 400 via the interface 510 and the network 300 on the basis of the processing server signal Sc, and delivers the requested information contained in the map information.

The VICS data acquirer 552, just like the VICS receiver 120 of the first embodiment, responds to the input of the processing server signal Sc and refers to the information about the request for the travel route search contained in the processing server signal Sc so as to acquire the VICS data from the VICS (not shown).

The traffic-congestion recognizer 553 responds to the input of the processing server signal Sc and refers to the information about the request for the travel route search contained in the processing server signal Sc so as to generate current traffic-congestion information as the memory signal Sm based on the VICS data acquired by the VICS data acquirer 552. Also, the traffic-congestion recognizer 553, just like the traffic-congestion recognizer 187, responds to the input of the processing server signal Sc and refers to and the information about the request for the travel route search based on the traffic-congestion information and the traffic-congestion prediction contained in the processing server signal Sc so as to generate traffic-congestion prediction information as the memory signal Sm. Then, the traffic-congestion recognizer 553 appropriately converts the generated memory signal Sm into a processing server signal Sc, outputs the processing server signal Sc to a predetermined or all terminal units 400 via the interface 510 and the network 300 on the basis of the processing server signal Sc, and notifies the current traffic-congestion condition and the predicted traffic-congestion prediction that might occur before the arrival to the destination.

The server coordinate matching section 554, just like the above-described coordinate matching section 186 of terminal unit 400, performs the coordinate matching processing for determining if point information about nodes N contained in the matching data MM of the map information indicate an identical point or not.

The route processor 555, just like the route processor 188 of the first embodiment, responds to the input of the processing server signal Sc and refers to the information about the request for the travel route search contained in the processing server signal Sc so as to generate travel route information and required time information as the memory signal Sm. Then, the route processor 555 appropriately converts the generated memory signal Sm into a processing server signal Sc, outputs the processing server signal Sc to a predetermined or all terminal units 400 via the interface 510 and the network 300 on the basis of the processing server signal Sc, and notifies the travel route and the required time.

The information retriever 556, just like the information retriever 189 of the first embodiment, responds to the input of the processing server signal Sc and refers to the information about the retrieval request for the retrieval information contained in the processing server signal Sc so as to hierarchically retrieve the retrieval information stored in the storage 540 typically on the basis of item information and read it as the memory signal Sm. Then, the information retriever 556 appropriately converts the generated memory signal Sm into a processing server signal Sc, outputs the processing server signal Sc to a predetermined or all terminal units 400 via the interface 510 and the network 300 on the basis of the processing server signal Sc, and delivers the retrieval information.

The calendar modifier 557 responds to the input of the processing server signal Sc and recognizes information contained in the processing server signal Sc, which may be calendar-modification request information requesting the modification of the calendar template 20 and terminal-specific information such as ID numbers for identifying a terminal unit 400 that generated the calendar-modification request information. Then, the calendar modifier 557, just like the calendar modifier 190 of the first embodiment, appropriately updates the calendar template 20 stored in the storage 540 and associated with the terminal unit 400 identified by the terminal-specific information stored in the storage 540.

The timer 558 recognizes the current time typically based on the pulse of an internal clock. Then, the timer 558 appropriately outputs time information about the recognized current time.

The CPU 550 responds to the signal Sin input from the input section 520 by the input operation at the input section 520, and appropriately performs computation based on the contents corresponding to the input operation to appropriately generate a signal Sdp. Then the CPU 550 appropriately outputs the generated various signals to the display 530, the interface 510 and the storage 540 and operates them so as to execute the input contents.

[Operation of Navigation System]

Now, the operation of the navigation system 200 will be described with reference to the attached drawings. The processing that is substantially the same as those of the first embodiment will be described only briefly.

(Calendar template modifying process)

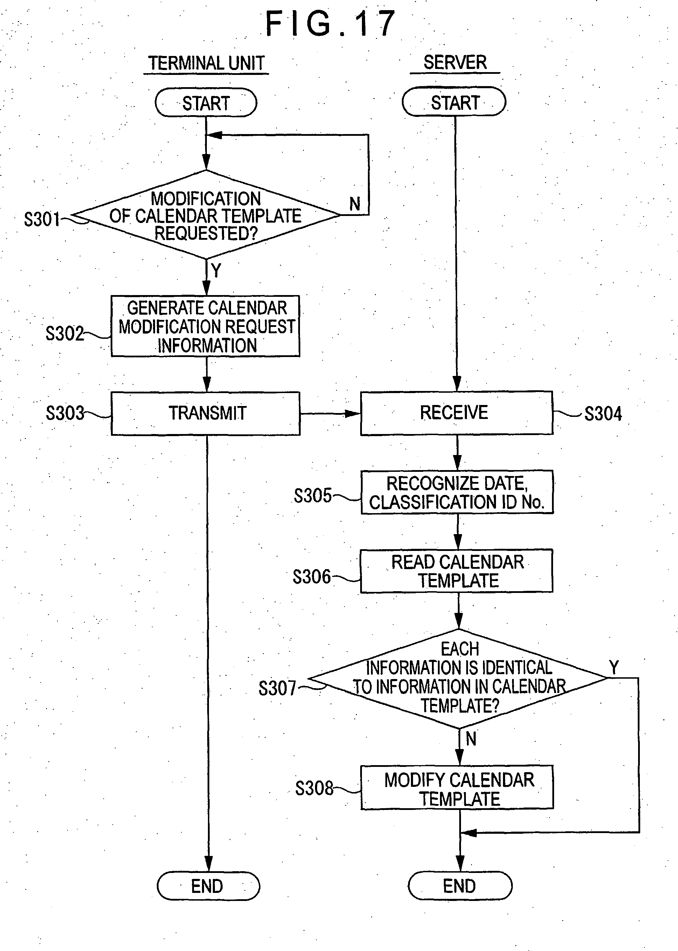

Firstly, the processing for modifying the calendar template 20 as one of the operations of the navigation system 200 will be described with reference to FIG. 17. Described herein is the processing for modifying the calendar template 20 as shown in FIG. 5 stored in the storage 540 of the server 500 based on the information about, for example, a festival scheduled on 5th in City A, that a user have recognized from the radio or TV broadcastings. FIG. 17 is a flowchart showing the processing for modifying a calendar template.

Firstly, the user in the vehicle switches on the terminal unit 400 to supply the power thereto. When the power is supplied, the processor 430 controls the terminal display 140 to display a main menu and a screen for prompting the user to set a specific operation to be executed by the terminal unit 400.

Then, as shown in FIG. 17, the user operates the terminal input section 130 to set a command for modifying the calendar template 20. When the processor 430 recognizes the set command for modifying the calendar template 20 at the calendar modifier 190 (Step S301), it makes the terminal display 140 display a screen for prompting the user to set the date information and event information for modifying the calendar template 20.

When the user sets the date information and the event information by operating the terminal input section 130 following the instructions on the displayed screen, the processor 430 recognizes the set date information and the event information. Then, the processor 430 generates calendar-modification request information containing the recognized date information and event information (Step S302), and the transceiver 410 transmits the generated calendar-modification request information to the server 500 via the network 300. When transmitting the calendar-modification request information, the transceiver 410 also transmits the terminal-specific information for identifying the terminal unit 400 (Step S303).

When the server 500 receives the calendar-modification request information and the terminal-specific information transmitted from the terminal unit 400 (Step S304), the calendar modifier 557 recognizes the date information and the event information contained in the received calendar-modification request information (Step S305). More specifically, the calendar modifier 557 recognizes the date specified according to the date information as 5th, and the classification ID number associated with the event information as "ID4".

Thereafter, the calendar modifier 557 reads out the calendar template 20 associated with the terminal unit 400 that transmitted the calendar-modification request information on the basis of the terminal-specific information received in the Step S304 (Step S306). Then, the calendar modifier 557 determines if the information recognized in the Step S305 is identical to the information contained in the calendar template 20 read in the Step S306 or not (Step S307).

If the calendar modifier 557 determines in the Step S307 that the information are identical, it ends the processing without modifying the calendar template 20. If, on the other hand, the calendar modifier 557 determines that the information are not identical, it modifies the calendar template 20 on the basis of the various information recognized in the Step S305 (Step S308). More specifically, since the classification ID number of the 5th recognized in the Step S305 is "ID4" and the classification ID number of the 5th recognized based on the calendar template 20 is "ID1", the calendar modifier 557 modifies the classification ID number of the 5th from "ID 1" to "ID4" as shown in FIG. 9. Then, the calendar modifier 557 associates the calendar template 20 containing the modified classification ID number with the terminal unit 400 that transmitted the calendar-modification request information to store it in the storage 540, and ends the processing.

(Processing for Travel Route Search)

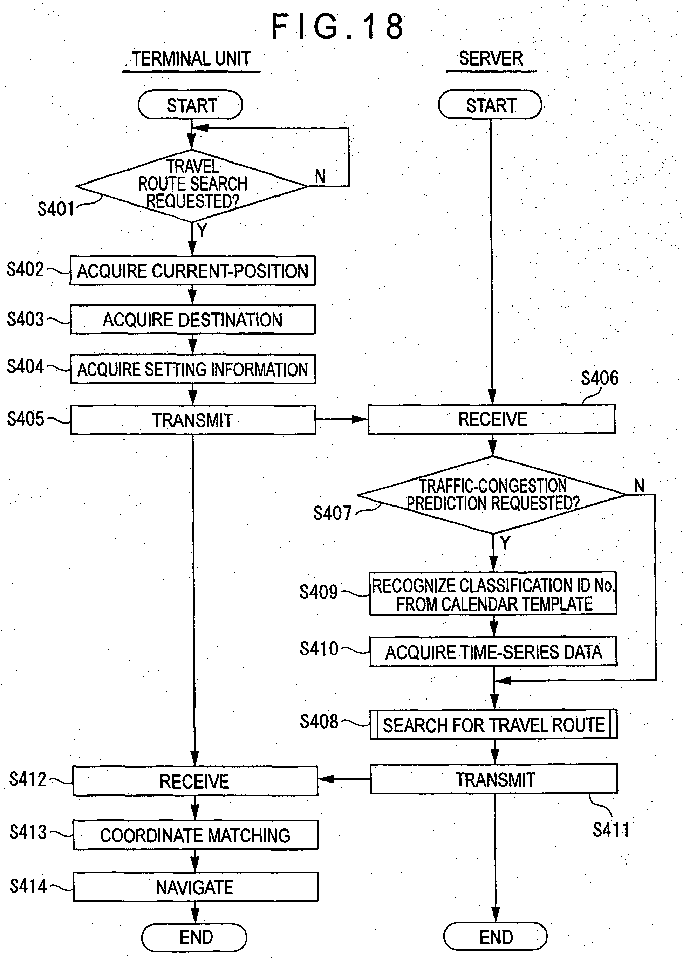

Now, the processing for travel route search as one of operations of the navigation system 200 will be described with reference to FIG. 18. Fig 18 is a flowchart showing the processing for travel route search in the navigation system.

Firstly as shown in FIG. 18, the user operates the terminal input section 130 to set a command for searching for a travel route. When the processor 430 recognizes the set command for searching for a travel route (Step S401), the processor 430 makes the terminal display 140 display a screen for prompting the user to set various information necessary for travel route search such as the destination, the setting information about the preference for shortest travel distance or shortest travel time and the necessity of traffic-congestion prediction.

When the processor 430 recognizes the various information necessary for the travel route search, the current-position recognizer 181 acquires the current-position information about the current-position (Step S402) and the destination recognizer 182 recognizes the destination information about the set destination (Step S403). The processor 430 also acquires the setting information about the settings that have been input (Step S404). The acquired current-position information, the destination information and the setting information are appropriately stored in the memory 420.

Thereafter, the processor 430 controls the transceiver 410 to transmit the current-position information, the destination information and the setting information stored in the memory 420 as well as a signal requesting the travel route search to the server 500. When transmitting the various information, the transceiver 410 also transmits the terminal-specific information for identifying the terminal unit 400 (Step S405).

When the server 500 receives the various information transmitted from the terminal unit 400 (Step S406), the route processor 555 of the CPU 550 determines if the received setting information contains a traffic-congestion prediction request information or not (Step S407)

If the route processor 555 of the CPU 550 determines in the Step S407 that the traffic-congestion request information is not contained, the VICS data acquirer 552 acquires the VICS data. Then, the traffic-congestion recognizer 553 of the CPU 550 generates current traffic-congestion information of an area containing the current-position and the destination based on the acquired VICS data. Thereafter, based on the current-position information, destination information, the setting information and the current traffic-congestion information, the route processor 555 of the CPU 550 executes a route search processing to search for the travel route from the current-position of the vehicle to the destination (Step S408).

More specifically, the route processor 555 generates some travel route information that meet the requirements of the user, using the map information stored in the storage 540. Then, the route processor 555 estimates the time required to arrive at the destination for each of the selected travel routes to generate required time information as in the case of the first embodiment. In the step for generating the travel route information, as in the case of the first embodiment, the route processor 555 might generate weighting information and set the weighting, or recommendation ranking, of a plurality of candidate travel routes based on the weighting information so as to notify it visually on the terminal display 140.

If, on the other hand, the route processor 555 determines in the Step S407 that the traffic-congestion prediction request information is contained, the route processor 555 acquires the time information from the timer 558 and recognizes the current date based on the acquired time information. Then, the traffic-congestion recognizer 553 of the CPU 550 reads out the calendar template 20 associated with the terminal unit 400 that requested the travel route search from the storage 540 on the basis of the terminal-specific information received in the Step S406. Thereafter, the traffic-congestion recognizer 553 retrieves and recognizes the classification ID number of the recognized date based on the read calendar template 20 (Step S409). Then, it recognizes the current-position and the destination based on the current-position information and the destination information received in the Step S406. Then, the traffic-congestion recognizer 553 retrieves and acquires the time-series data 12i corresponding to the recognized classification ID number and containing the current-position and the destination from the traffic-congestion prediction table 10 stored in the storage 540 (Step S410).

Thereafter, the CPU 550 performs the processing of the Step S408. More specifically, the traffic-congestion recognizer 553 of the CPU 550 generates current traffic-congestion information. Based on the current-position information, destination information, setting information and current traffic-congestion information, the route processor 555 of the CPU 550 detects a plurality of travel routes and selects some of the travel routes on the basis of the acquired setting information to generate candidate travel route information about a plurality of candidate travel routes that meet the requirements of the user.

Then, the traffic-congestion recognizer 553 of the CPU 550 acquires the current time and day from the timer 558. Then, based on the current traffic-congestion information and the current time and day, the traffic-congestion recognizer 553 estimates the expected arrival time to arrive at a desired location on each of the candidate travel routes contained in the candidate travel route information generated by the route processor 555. Then, the traffic-congestion recognizer 553 predicts the condition of the traffic-congestion at the desired location on each of the candidate travel routes at the expected arrival time on the basis of the time-series data 12i acquired in the Step S410 and generates traffic-congestion prediction information about the predicted condition of the traffic-congestion.

Based on the current traffic-congestion information and the traffic-congestion prediction information, the route processor 555 of the CPU 550 selects some of the candidate travel routes contained in the candidate travel route information to generate travel route information about the selected travel routes that meet the requirements of the user, the condition of the current traffic-congestion and that of the predicted traffic-congestion. Then, the route processor 555 generates required time information for each of the travel routes contained in the travel route information.

After the Step S408, the server 500 controls the interface 510 on the basis of the terminal-specific information received in the Step S406 and appropriately transmits the travel route information, the traffic-congestion prediction information, the required time information and the current traffic-congestion information obtained as a result of the route search processing to the predetermined terminal unit 400 together with map information (Step S411). It may acquire the matching data MM in advance on the basis of the current-position information on. The map information to be transmitted needs to include only the matching mesh information MMx of the matching data MM that contains the nodes N and the links L for the roads of the travel routes, the display mesh information VMx of the display data VM for other areas, the name information VMxA and the background information VMxC in the area corresponding to the matching mesh information MMx.

When the processor 430 of the terminal unit 400 receives the various information (Step S412), it performs the coordinate matching processing for the received matching data MM (Step S413) and recognizes the arrangement of roads, or the connection of roads, which are then appropriately stored in the memory 420. Under the control of the processor 430, the display controller 184 makes the terminal display 140 display the travel route information about, e.g., five candidate travel routes computed by the server 500 and a screen for prompting the user to select a travel route. The user selects and inputs the travel route information about any one of the route, and thus the travel is set.

Thereafter, under the control of the display controller 184 of the processor 430, the terminal display 140 superimposes an icon indicating the current-position of the vehicle on the basis of the current-position information as well as the travel route information selected by the user, the traffic-congestion prediction information, the required time information and the current traffic-congestion information on the received map information.

Subsequently, the processor 430 recognizes the travel progress of the vehicle based on the various data output from the sensor 110. Then, the guidance providing section 183 of the processor 430 provides the guidance information for guiding the travel of the vehicle in visual or audio form on the basis of the recognized travel progress and the route guidance information contained in the travel route information. (Step S414).

The server 500 performs the reroute search as in the case of the first embodiment. Specifically, the VICS data acquirer 552 acquires the VICS data etc. as in the case of the embodiment shown in FIG. 11. Then, if travel status of the vehicle might be affected or a route change might be required because of, e.g., a traffic accident, according to the VICS data acquired by the VICS data acquirer 552, the CPU 550 generates reroute confirming information for confirming if a route search processing should be performed again or not. Then, under the control of the CPU 550, the interface 510 transmits the reroute confirming information to a predetermined terminal unit 400 on the basis of the terminal-specific information received in the Step S406.

When the terminal unit 400 receives the reroute confirming information, the display controller 184 of the processor 430 makes the terminal display 140 display a screen for prompting the user to decide if the route search should be performed again or not, and a screen for prompting the user to input the destination information and the setting information etc. Thereafter, upon recognizing the input decision on performing the route search again or not as well as the input destination information and setting information etc., the processor 430 generates reroute request information containing the recognized information. Then, the processor 430 controls the transceiver 410 to transmit the reroute request information and the terminal-specific information to the server 500.

Upon receiving the various information transmitted from the terminal unit 400, the server 500 recognizes if the user decided to perform the route search again or not on the basis of the received reroute request information. If the server 500 recognizes the decision to not perform the route search, the server 500 does not perform any processing. If, on the other hand, the server 500 recognizes the decision to perform the route search, the CPU 550 performs the route search again based on the reroute request information as in the case of the first embodiment shown in FIG. 11. Then, the server 500 controls the interface 510 according to the received terminal-specific information to transmit the various information obtained as a result of the reroute search processing together with the map information (if necessary) to the predetermined terminal unit 400. When the processor 430 of the terminal unit 400 receives the various information from the server 500, it performs the processing of the Step S412 and the Step S413.


[Advantages of Second Embodiment]

According to the second embodiment as described earlier, when the server 500 recognizes the request signal requesting the travel route search together with the current-position information about current-position of the vehicle and the destination information about the destination for the vehicle to travel, the route processor 555 of the server 500, as in the case of the first embodiment, searches for a plurality of candidate travel routes for the vehicle based on the traffic information such as the current traffic-congestion information and the traffic-congestion prediction information about the traffic condition for the vehicle recognized by the traffic-congestion recognizer 553, and notifies, or transmits, them to the terminal unit 400 for the navigation. The user of the terminal unit 400 sets a predetermined travel route and displays it on the terminal display 140. If the traffic-congestion recognizer 553 acquires the traffic information indicating that there is a congested or slow traffic which might affect the travel smoothness of the vehicle on the travel route set by the terminal unit 400, the server 500, as in the case of the first embodiment, computes the travel smoothness, or the required time, of the travel route and other detour travel routes. Then it computes the weighting, or the appearance probability of the respective travel routes based on the required time to generate the weighting information, and selects any one of the travel routes so as to notify, or transmit, the terminal unit 400 to display it on the terminal display 140. Accordingly, as in the case of the first embodiment, since the terminal units 400 installed on vehicles traveling in a same zone perform similar processing and allocate the respective vehicles to each travel route, the required time of the respective travel routes is equalized, and thus preventing a heavy traffic-congestion from being focused only on certain roads and realizing stable traffic conditions. Therefore, the navigation for offering a smooth travel for vehicles can be easily provided

According to the second embodiment, since the current-position information of the vehicle is acquired from the terminal unit 400, it can be determined if the vehicle travels on the travel route notified based on the reroute search or not. Therefore, if it is determined that the vehicle does not travel on the travel route notified based on the reroute search, the coefficient might may be set to lower the percentage of the travel route. Thus, the percentage of the travel route to be selected in the step of the reroute search by other terminal units 400 may be changed. With this configuration, the required time of the respective travel routes can be further equalized and the stable traffic conditions can be obtained, thereby easily realizing the navigation with higher accuracy for allowing the vehicle to travel smoothly. The percentage may be changed with any method other than the method using the coefficient.

According to the second embodiment, the server 500 stores the map information and the traffic-congestion prediction table 10 used for the traffic-congestion predictions, of which data volume is relatively large. Therefore, the configuration of the terminal unit 400 can be simplified. Also, if the map information and the traffic-congestion prediction table 10 stored in the server 500 are updated, the terminal units 400 can share the updated information. Thus, the navigation system 200 can be improved in terms of the maintenance and management ability and the operation ability. Further, the terminal units 400 can appropriately acquire the most updated information and provide good navigating according to the most updated information, thereby improving the usability.

The server 500 storing the map information and the traffic-congestion prediction table 10 searches for the travel route and delivers the travel route to the terminal unit 400. With this configuration, the processing load of the terminal units 400 can be reduced. In other words, the terminal unit 400 is not required to have a large processing capacity, so that the terminal unit 400 may be simply configured allowing the use in a mobile phone etc. Thus, the size and the cost thereof can be reduced, and thereby easily promoting the wide use thereof.

Since the processor 180 of the terminal unit 400 and the CPU 550 of the server 500 are configured as programs, the use of the map information is facilitated and thereby promoting the wider use thereof. The programs may be recorded on recording medium so that a computing section, or a computer, reads them. With this configuration, the use of the map information can be facilitated and the programs can be easily handled, thereby further expanding the use thereof. The computing section may not necessarily be a single computer but may be a plurality of computers connected over a network, elements such as a CPU and a microcomputer, or a circuit board on which a plurality of electronic parts are mounted.

[Modification of Embodiment]

The present invention is not limited to the above specific embodiments, but includes modifications and improvements as long as the objects of the present invention can be attained.

The movable body is not limited to a vehicle, but includes any movable body such as an airplane or a ship. The user oneself may be the movable body if the current-position of the user carrying the terminal unit 400 is recognized as the current-position of the terminal unit 400. Additionally, as mentioned earlier, a mobile phone or a PHS (Personal Handyphone System) may be used as the terminal unit 400 that can be carried directly by the user, while the base station of the mobile phone or the PHS may be used as the server 500. With this arrangement, the mobile phone or the PHS may acquire information from the base station. In any case, as described above, the present invention is most effectively applicable to a movable body to which a traffic-congestion can be an obstacle to the travel thereof.

The traffic condition is not limited to traffic-congestion condition but may include various situations relating to the travel of movable bodies.

While some of the travel routes selected based on the destination information and setting information are transmitted in the above described embodiments, the travel route may be selected, or searched, only on the basis of the current-position information and the destination information. While the current-position recognizer recognizes the current-position information based on the data output from the various sensors and the GPS data output from the GPS receiver in the above described embodiments, other arrangement method may alternatively be used to recognize the current-position of the movable body. As described above, the current-position recognizer may recognize the simulated current-position input at the terminal input section 130 as the current-position. While some travel routes are notified so that the user can select one of them, only the best travel route may be notified.

The travel route set on the basis of the weighting information may be notified not only at the reroute search but also at the route search for searching for a travel route to navigate the vehicle. With this configuration, more stable traffic conditions can be obtained and thus the navigation for smoother travel of the vehicle can be obtained with ease.

The number of the travel route to be notified based on the weighting information is not limited to one. A plurality of candidate travel routes may be notified based on the weighting information with the recommendation priority.

While the functions are realized in the form of programs in the above description, the functions may be realized in any form including a hardware such as a circuit board or elements such as IC (Integrated Circuit). In view of easy handling and promotion of the use, the functions are preferably stored and read from programs or recording media.

While the server 500 stores the map information and the traffic-congestion prediction table 10 in the above described second embodiment, the terminal unit 400 may alternatively stores at least either the map information or the traffic-congestion prediction table 10.

While the transceiver 410 is arranged in the terminal unit 400 in the above description, the transceiver 410 may be separated from the terminal unit 400 and a mobile phone or a PHS may be used as the transceiver 410. In this case, the terminal unit 400 is connected to the transceiver 410 to send/receive information when necessary.

The arrangements and the operating procedures for the present invention may be appropriately modified as long as the scope of the present invention can be attained.

[Advantages of Embodiments]

According to the above embodiment as described earlier, a plurality of candidate travel routes for the vehicle are searched and notified based on the current-position information about the current-position of the vehicle, the destination information about the destination for the vehicle to travel, and the traffic information such as the current traffic-congestion information and the traffic-congestion prediction information about the traffic condition for the vehicle. If the traffic information indicating that there is a congested or slow traffic which might affect the travel smoothness of the vehicle on the travel route used for navigation is recognized, the travel smoothness, i.e., the required time of the travel route and other detour travel routes is computed. Then the weighting, i.e., the appearance probability of the respective travel routes is computed based on the required time to generate the weighting information, and any one of the travel routes is selected based on the weighting information. Accordingly, since the navigation devices 100 installed on vehicles traveling in a same zone perform similar processing and allocate the respective vehicles to each travel route, the required time on travel each route is equalized, and thus preventing the concentration of heavy traffic-congestions only on certain roads and realizing stable traffic conditions. Therefore, the navigation for a smooth travel for vehicles can be easily provided.

According to the above embodiment, when the server 500 recognizes the request signal requesting the travel route search together with the current-position information about the current-position of the vehicle and the destination information about the destination for the vehicle to travel from the terminal unit 400, the server 500 searches for a plurality of candidate travel routes for the vehicle based on the recognized traffic information such as the current traffic-congestion information and the traffic-congestion prediction information about the traffic condition for the vehicle, and transmits them to the terminal unit 400 for the navigation. If the traffic information indicating that there is a congested or slow traffic which might affect the travel smoothness of the vehicle on the travel route set by the terminal unit 400 is recognized, the travel smoothness, i.e., the required time of the travel route and other detour travel routes is computed. Then the weighting, i.e., the appearance probability of the respective travel routes is computed based on the required time to generate the weighting information, and any one of the travel routes is selected based on the weighting information and transmitted to the terminal unit 400. Accordingly, since the terminal units 400 installed on vehicles traveling in a same zone perform similar processing and allocate the respective vehicles to each travel route, the required time on travel each route is equalized, and thus preventing the concentration of heavy traffic-congestions only on certain roads and realizing stable traffic conditions. Therefore, the navigation for offering a smooth travel for vehicles can be easily provided.

**Claims**

1. A guiding device (100) for navigating a travel of a movable body, comprising:

   a map information acquirer (180,187) for acquiring map information;
   a current-position information acquirer (110) for acquiring current-position information about a current-position of the movable body;
   a destination information acquirer (180,182) for acquiring destination information about a position of a destination to which the movable body travels;
   a traffic information acquirer (120) for acquiring traffic information about a traffic condition for the movable body; and

a travel route search section that searches for a plurality of travel routes for the movable body based on the current position information, the destination information and the map information;

the guiding device **characterised by** including:

a travel smoothness i.e, the required time of the travel route and other detour travel routes, recognizer (180,188) for recognizing travel smoothness of the plurality of travel routes for the movable body to travel based on the traffic information;
a travel route setting section (180,188) that calculates each selection percentage of the plurality of travel routes based on the travel smoothness, and set a recommended travel route based on the selection percentage; and
a notification section for notifying the recommended travel route.

2. A guiding device (100) according to claim 1, wherein:

the travel smoothness recognizer recognizes the travel smoothness on the recommended travel route, and

wherein the travel route setting section (180,188) is adapted to re-calculate the selection percentage based on the travel smoothness of the recommend travel route and the travel smoothness of the other travel routes; and reset the recommended travel route based on the recalculated selection percentage.

3. A guiding device (100) according to claim 2, wherein the travel route setting section (180,188) resets the recommended travel route when the travel smoothness on the recommended travel route is changed.

4. A guiding device (100) according to any one claims 1 to 3;
wherein the travel smoothness recognizer (180,188) recognizes each required time for the movable body to travel on the plurality travel routes as the travel smoothness and
wherein the travel route search setting (180,188) assigns higher selection percentage to the travel route with shorter required time.

5. A guiding device (100) according to any one of claims 1 to 4, wherein the travel route setting section (180,188) assigns higher selection percentage to a travel route of which required time has smaller share in the total required time of the plurality of travel routes.

6. A guiding device (100) according to any one claims 1 to 5, wherein the travel route setting section (180,188) makes the notification section not to notify a travel route assigned with the selection percentage smaller than a predetermined value.

7. A guiding device (100) according to any one of claims 1 to 6, wherein the traffic information acquirer (120) acquires at least either a current traffic condition or a traffic condition obtained by statistically processing past traffic conditions based on time factors as the traffic information.

8. A guiding system (200) comprising:

a server (500) having a storage for storing map information; and
a guiding device (100) according to any of claims 1 to 7 for acquiring the map information from the server over a network (300).

9. A guiding system (200) comprising:

a terminal unit (400) that requests a travel route; and
a guiding device (100) according to any one of claims 1 to 7 that is connected to the terminal unit for communicating therewith over a network (300) and adapted to notify the recommended travel route to the terminal unit.

10. A guiding system (200) comprising:

a terminal unit (400) having: a request signal generating section for generating a request signal requesting a travel route; and an output section (150) for outputting the travel route; and
a server (500) that is connected to the terminal unit for communicating therewith over a network (300) and provided with:

a storage for storing map information;
a current-position information acquirer (110) for acquiring current-position information about a current-position of a movable body;
a destination information acquirer (430,182) for acquiring destination information about a position of a destination to which the movable body travels;
a traffic information acquirer (550,552) for acquiring traffic information about a traffic condition for the movable body;
a request signal recognizer for recognizing the request signal; and
a travel route search that searches for a plurality of travel routes in accordance with the recognized travel smoothness and based on the current position information, the destination information and the map information;
the guiding system **characterised in that** the server further includes:

a travel smoothness recognizer (550,555) that recognizes travel smoothness for the movable body to travel based on the traffic information;
a travel route setting section (550,555) that calculates each selection percentage of the plurality of travel routes when the request signal recognizer recognizes the request signal and sets a recommended travel route based on the selection percentage; and
a notification section for notifying the recommended travel route to the terminal unit so that the travel route can be output by the output section of the terminal unit.

11. The guiding system (200) according to claim 10;
wherein the travel smoothness recognizer recognizes the travel smoothness on the recommended travel route, and wherein the travel route setting section is adapted to recalculate the selection percentage based on the travel smoothness of the recommended travel route and the travel smoothness of the other travel routes and re-set the recommended travel route based on the selection percentage.

12. A guiding system according to claims 10 or 13;
wherein the current position acquirer acquires current position information of the movable body equipped with the terminal unit to which the travel route is notified by the notification section, and
wherein if the travel route setting section determines that the movable body does not travel on the recommended travel route based on the current position information of the movable body and the recommended travel route, the travel route setting section changes the selection percentage.

13. A guiding system (200) according to claim 14;
wherein if the travel route setting section (550,555) determines that the movable body does not travel on the recommended travel route, the travel route setting section reduces the percentage assigned to other travel route on which the movable body currently travels.

14. A guiding method comprising:

acquiring map information, current-position information about a current-position of a movable body, destination information about a position of a destination to which the movable body travels, and traffic information about a traffic condition for the movable body;
searching for a travel route for the movable body based on the current-position information, the destination information and the map information;
recognizing travel smoothness for the movable body to travel on the plurality of travel routes based on the traffic information;
calculating each selection percentage of the plurality of travel routes based on the travel smoothness on the plurality of travel routes; and
setting and notifying a recommended travel route based on the selection percentage.

15. A guiding method according to claim 14;
wherein the travel smoothness on the plurality of travel routes and the selection percentage of each of the plurality of travel routes are recalculated after the notification of the recommended travel route, and
wherein the recommended travel route is reset based on the recalculated selection percentage.

24

**16.** A guiding program for executing the guiding method according to claim 14 or 15 by a computer.

**17.** A recording medium storing the guiding program according to claim 16 in a manner readable by a computer.

**Patentansprüche**

**1.** Leitvorrichtung (100) zum Navigieren einer Fahrt eines beweglichen Körpers, der umfasst:

eine Karteninformations-Erfassungseinrichtung (180, 187) zum Erfassen von Karteninformationen;
eine Einrichtung (110) zum Erfassen von Informationen über eine aktuelle Position, die Informationen über eine aktuelle Position des beweglichen Körpers erfasst;
eine Zielinformations-Erfassungseinrichtung (180, 182) zum Erfassen von Zielinformationen über eine Position eines Ziels, zu dem der bewegliche Körper fährt; eine Verkehrsinformations-Erfassungseinrichtung (120) zum Erfassen von Verkehrs-Informationen über einen Verkehrszustand des beweglichen Körpers; und
einen Fahrtrouten-Suchabschnitt, der eine Vielzahl von Fahrtrouten für den beweglichen Körper auf Basis der Informationen über die aktuelle Position, der Zielinformationen und der Karteninformationen sucht;

wobei die Leitvorrichtung **dadurch gekennzeichnet ist, dass** sie enthält:

eine Einrichtung (180, 188) zum Erkennen von Störungsfreiheit der Fahrt, d.h. der erforderlichen Zeit für die Fahrtroute und andere Umgehungs-Fahrtrouten, die Störungsfreiheit der Fahrt für die Fahrt des beweglichen Körpers auf der Vielzahl von Fahrtrouten auf Basis der Verkehrs-Informationen erkennt;
einen Fahrtrouten-Festlegeabschnitt (180, 188), der jeden Auswahl-Prozentsatz der Vielzahl von Fahrtrouten auf Basis der Störungsfreiheit der Fahrt berechnet und eine empfohlene Fahrtroute auf Basis des Auswahl-Prozentsatzes festlegt; und
einen Mitteilungsabschnitt, der die empfohlene Fahrtroute mitteilt.

**2.** Leitvorrichtung (100) nach Anspruch 1, wobei:

die Einrichtung zum Erkennen von Störungsfreiheit der Fahrt die Störungsfreiheit der Fahrt auf der empfohlenen Fahrtroute erkennt, und

wobei der Fahrtrouten-Festlegeabschnitt (180, 188) so eingerichtet ist, dass er den Auswahl-Prozentsatz auf Basis der Störungsfreiheit der Fahrt der empfohlenen Fahrtroute und der Störungsfreiheit der Fahrt der anderen Fahrtrouten neu berechnet und die empfohlene Fahrtroute auf Basis des neu berechneten Auswahl-Prozentsatzes neu festlegt.

**3.** Leitvorrichtung (100) nach Anspruch 2, wobei der Fahrtrouten-Festlegeabschnitt (180, 188) die empfohlene Fahrtroute neu festlegt, wenn sich die Störungsfreiheit der Fahrt auf der empfohlenen Fahrtroute ändert.

**4.** Leitvorrichtung (100) nach einem der Ansprüche 1 bis 3;
wobei die Einrichtung (180, 188) zum Erkennen von Störungsfreiheit der Fahrt jede erforderliche Zeit für die Fahrt des beweglichen Körpers auf der Vielzahl von Fahrtrouten als die Störungsfreiheit der Fahrt erkennt, und
wobei der Fahrtrouten-Festlegeabschnitt (180, 188) der Fahrtroute mit kürzerer erforderlicher Zeit höheren Auswahl-Prozentsatz zuweist.

**5.** Leitvorrichtung (100) nach einem der Ansprüche 1 bis 4, wobei der Fahrtrouten-Festlegeabschnitt (180, 188) einer Fahrtroute, deren erforderliche Zeit einen kleineren Anteil an der insgesamt erforderlichen Zeit der Vielzahl von Fahrtrouten hat, einen höheren Auswahl-Prozentsatz zuweist.

**6.** Leitvorrichtung (100) nach einem der Ansprüche 1 bis 5, wobei der Fahrtrouten-Festlegeabschnitt (180, 188) den Mitteilungsabschnitt veranlasst, eine Fahrtroute, der der Auswahl-Prozentsatz zugewiesen wird, der unter einem vorgegebenen Wert liegt, nicht mitzuteilen.

**7.** Leitvorrichtung (100) nach einem der Ansprüche 1 bis 6, wobei die Verkehrsinformations-Erfassungseinrichtung (120) als die Verkehrsinformationen wenigstens entweder einen aktuellen Verkehrszustand oder einen Verkehrszustand erfasst, der ermittelt wird, indem vergangene Verkehrszustände auf Basis von Zeitfaktoren statistisch verarbeitet werden.

8. Leitsystem (200), das umfasst:

einen Server (500), der einen Speicher zum Speichern von Karteninformationen aufweist; und
eine Leitvorrichtung (100) nach einem der Ansprüche 1 bis 7, die die Karteninformationen von dem Server über ein Netzwerk (300) bezieht.

9. Leitsystem (200), das umfasst:

eine Endgeräteeinheit (400), die eine Fahrtroute anfordert; und
eine Leitvorrichtung (100) nach einem der Ansprüche 1 bis 7, die mit der Endgeräteeinheit verbunden ist, um damit über ein Netzwerk (300) zu kommunizieren, und so eingerichtet ist, dass sie der Endgeräteeinheit die empfohlene Fahrtroute mitteilt.

10. Leitsystem (200), das umfasst:

eine Endgeräteeinheit (400), die einen Anforderungssignal-Erzeugungsabschnitt zum Erzeugen eines Anforderungssignals, das eine Fahrtroute anfordert, und einen Ausgabeabschnitt (150) zum Ausgeben der Fahrtroute aufweist; und
einen Server (500), der mit der Endgeräteeinheit zur Kommunikation damit über ein Netzwerk (300) verbunden ist und versehen ist mit:

einem Speicher zum Speichern von Karteninformationen;
einer Einrichtung (110) zum Erfassen von Informationen über eine aktuelle Position, die Informationen über eine aktuelle Position eines beweglichen Körpers erfasst;
eine Zielinformations-Erfassungseinrichtung (430, 182), die Zielinformationen über eine Position eines Ziels erfasst, zu dem der bewegliche Körper fährt;
eine Verkehrsinformations-Erfassungseinrichtung (550, 552), die Verkehrs-Informationen über einen Verkehrszustand für den beweglichen Körper erfasst;
eine Anforderungssignal-Erfassungseinrichtung zum Erkennen des Anforderungssignals; und
einen Fahrtrouten-Suchabschnitt, der eine Vielzahl von Fahrtrouten entsprechend der erkannten Störungsfreiheit der Fahrt und auf Basis der Informationen über die aktuelle Position, die Zielinformationen und die Karteninformationen sucht;

wobei das Leitsystem **dadurch gekennzeichnet ist, dass** der Server des Weiteren enthält:

eine Einrichtung (550, 555) zum Erkennen von Störungsfreiheit der Fahrt, die Störungsfreiheit der Fahrt für die Fahrt des beweglichen Körpers auf Basis der Verkehrs-Informationen erkennt;
einen Fahrtrouten-Festlegeabschnitt (550, 555), der jeden Auswahl-Prozentsatz der Vielzahl von Fahrtrouten berechnet, wenn die Anforderungssignal-Erkennungseinrichtung das Anforderungssignal erkennt, und eine empfohlene Fahrtroute auf Basis des Auswahl-Prozentsatzes festlegt; und
einen Mitteilungsabschnitt, der der Endgeräteeinheit die empfohlene Fahrtroute mitteilt, so dass die Fahrtroute durch den Ausgabeabschnitt der Endgeräteeinheit ausgegeben werden kann.

11. Leitsystem (200) nach Anspruch 10,
wobei die Einrichtung zum Erkennen von Störungsfreiheit der Fahrt die Störungsfreiheit der Fahrt auf der empfohlenen Fahrtroute erkennt, und
wobei der Fahrtrouten-Festlegeabschnitt so eingerichtet ist, dass er den Auswahl-Prozentsatz auf Basis der Störungsfreiheit der Fahrt der empfohlenen Fahrtroute und der Störungsfreiheit der Fahrt der anderen Fahrtrouten neu berechnet und die empfohlene Fahrtroute auf Basis des Auswahl-Prozentsatzes neu festlegt.

12. Leitsystem nach den Ansprüchen 10 oder 13,
wobei die Einrichtung zum Erfassen der aktuellen Position die Informationen über die aktuelle Position des beweglichen Körpers erfasst, der mit der Endgeräteeinheit ausgestattet ist, der die Fahrtroute durch den Mitteilungsabschnitt mitgeteilt wird, und
wobei, wenn der Fahrtrouten-Festlegeabschnitt auf Basis der Informationen über die aktuelle Position des beweglichen Körpers und der empfohlenen Fahrtroute feststellt, dass der bewegliche Körper nicht auf der empfohlenen Fahrtroute fährt, der Fahrtrouten-Festlegeabschnitt den Auswahl-Prozentsatz ändert.

**13.** Leitsystem (200) nach Anspruch 14;
wobei, wenn der Fahrtrouten-Festlegeabschnitt (550, 555) feststellt, dass der bewegliche Körper nicht auf der empfohlenen Fahrtroute fährt, der Fahrtrouten-Festlegeabschnitt den Prozentsatz reduziert, der der anderen Fahrtroute zugewiesen wird, auf der der bewegliche Körper aktuell fährt.

**14.** Leitverfahren, das umfasst:

Erfassen von Karteninformationen, aktueller Positionsinformationen über eine aktuelle Position eines beweglichen Körpers, Zielinformationen über eine Position eines Ziels, zu dem der bewegliche Körper fährt, und Verkehrs-Informationen über einen Verkehrszustand für den beweglichen Körper;
Suchen einer Fahrtroute für den beweglichen Körper auf Basis der aktuellen Positionsinformationen, der Zielinformationen und der Karteninformationen; Erkennen von Störungsfreiheit der Fahrt für die Fahrt des beweglichen Körpers auf der Vielzahl von Fahrtrouten auf Basis der Verkehrs-Informationen;
Berechnen jedes Auswahl-Prozentsatzes der Vielzahl von Fahrtrouten auf Basis der Störungsfreiheit der Fahrt auf der Vielzahl von Fahrtrouten; und
Festlegen und Mitteilen einer empfohlenen Fahrtroute auf Basis des Auswahl-Prozentsatzes.

**15.** Leitverfahren nach Anspruch 14,
wobei die Störungsfreiheit der Fahrt auf der Vielzahl von Fahrtrouten und der Auswahl-Prozentsatz jeder der Vielzahl von Fahrtrouten nach der Mitteilung der empfohlenen Fahrtroute neu berechnet werden, und
wobei die empfohlene Fahrtroute auf Basis des neu berechneten Auswahl-Prozentsatzes neu festgelegt wird.

**16.** Leitprogramm zum Ausführen des Leitverfahrens nach Anspruch 14 oder 15 durch einen Computer.

**17.** Aufzeichnungsmedium, das das Leitprogramm nach Anspruch 16 auf durch einen Computer lesbare Weise speichert.

**Revendications**

**1.** Dispositif de guidage (100) pour guider la circulation d'un corps en mouvement, comprenant :

un module d'acquisition d'informations de localisation géographique (180, 187), pour acquérir des informations de localisation géographique ;
un module d'acquisition d'informations de position actuelle (110), pour acquérir des informations de position actuelle relatives à une position actuelle du corps en mouvement ;
un module d'acquisition d'informations de destination (180, 182), pour acquérir des informations de destination relatives à une position de destination vers laquelle le corps en mouvement se déplace ;
un module d'acquisition d'informations de circulation (120), pour acquérir des informations de circulation relatives à une condition de circulation pour le corps en mouvement ; et
une section de recherche de route de circulation qui recherche une pluralité de routes de circulation pour le corps en mouvement en se basant sur les informations de position actuelle, sur les informations de destination et sur les informations de localisation géographique ;

le dispositif de guidage étant **caractérisé en ce qu'**il comprend :

un module de reconnaissance d'une régularité de circulation - en d'autres termes, le temps requis par la route de circulation et d'autres routes de circulation détournées (180, 188) pour reconnaître une régularité de circulation de la pluralité de routes de circulation que le corps en mouvement doit emprunter en se basant sur les informations de circulation ;
une section de paramétrage de route de circulation (180, 188) qui calcule chaque pourcentage de sélection de la pluralité de routes de circulation en se basant sur la régularité de circulation, et qui paramètre une route de circulation recommandée en se basant sur le pourcentage de sélection ; et
une section de notification pour notifier la route de circulation recommandée.

**2.** Dispositif de guidage (100) selon la revendication 1, dans lequel :

le module de reconnaissance de régularité de la circulation reconnaît la régularité de circulation sur la route de circulation recommandée, et

dans lequel la section de paramétrage de route de circulation (180, 188) est adaptée pour recalculer le pourcentage de sélection en se basant sur la régularité de circulation de la route de circulation recommandée et sur la régularité de circulation des autres routes de circulation ; et pour re-paramétrer la route de circulation recommandée en se basant sur le pourcentage de sélection recalculé.

**3.** Dispositif de guidage (100) selon la revendication 2, dans lequel la section de paramétrage de route de circulation (180, 188) re-paramètre la route de circulation recommandée quand la régularité de circulation sur la route de circulation recommandée se modifie.

**4.** Dispositif de guidage (100) selon l'une quelconque des revendications 1 à 3,
dans lequel le module de reconnaissance de régularité de la circulation (180, 188) reconnaît chaque temps de parcours requis pour que le corps en mouvement se déplace sur la pluralité de routes de circulation en tant que la régularité de circulation,
et
dans lequel la section de paramétrage de recherche de route de circulation (180, 188) attribue un pourcentage de sélection plus élevé à la route de circulation qui présente le temps de parcours requis le plus court.

**5.** Dispositif de guidage (100) selon l'une quelconque des revendications 1 à 4, dans lequel la section de paramétrage de route de circulation (180, 188) attribue un pourcentage de sélection plus élevé à une route de circulation dont le temps de parcours requis représente la part la moins importante dans le temps de parcours total requis de la pluralité de routes de circulation.

**6.** Dispositif de guidage (100) selon l'une quelconque des revendications 1 à 5, dans lequel la section de paramétrage de route de circulation (180, 188) amène la section de notification à ne pas notifier une route de circulation à laquelle est attribué le pourcentage de sélection inférieur à une valeur prédéterminée.

**7.** Dispositif de guidage (100) selon l'une quelconque des revendications 1 à 6, dans lequel le module d'acquisition d'informations de circulation (120) acquiert au moins soit une condition de trafic actuelle, soit une condition de trafic obtenue en traitant de manière statistique des conditions de trafic antérieures en se basant sur des facteurs de temps utilisés en tant que les informations de circulation.

**8.** Système de guidage (200), comprenant :

un serveur (500) comprenant une capacité de stockage pour stocker des informations de localisation géographique ; et
un dispositif de guidage (100) selon l'une quelconque des revendications 1 à 7, pour acquérir les informations de localisation géographique à partir du serveur par le biais d'un réseau (300).

**9.** Système de guidage (200), comprenant :

un module terminal (400) qui sollicite une route de circulation ; et
un dispositif de guidage (100) selon l'une quelconque des revendications 1 à 7, qui est connecté au module terminal pour communiquer avec lui par le biais d'un réseau (300) et qui est adapté pour notifier la route de circulation recommandée au module terminal.

**10.** Système de guidage (200), comprenant:

un module terminal (400) comprenant : une section de génération de signal de requête, pour générer un signal de requête sollicitant une route de circulation ; et une section de sortie (150) pour délivrer en sortie la route de circulation ; et
un serveur (500) qui est connecté au module terminal pour communiquer avec lui par le biais d'un réseau (300) et qui comprend :

une capacité de stockage pour stocker des informations de localisation géographique ;
un module d'acquisition d'informations de position actuelle (110), pour acquérir des informations de position actuelle relatives à une position actuelle d'un corps en mouvement ;

un module d'acquisition d'informations de destination (430, 182), pour acquérir des informations de destination relatives à une position de destination vers laquelle le corps en mouvement se déplace ;

un module d'acquisition d'informations de circulation (550, 552), pour acquérir des informations de circulation relatives à une condition de circulation pour le corps en mouvement ;

un module de reconnaissance de signal de requête pour reconnaître le signal de requête ; et

une section de recherche de route de circulation qui recherche une pluralité de routes de circulation en accord avec la régularité de circulation reconnue et en se basant sur les informations de position actuelle, sur les informations de destination et sur les informations de localisation géographique ;

le système de guidage étant **caractérisé en ce que** le serveur comprend par ailleurs:

un module de reconnaissance d'une régularité de circulation (550, 555) qui reconnaît une régularité de circulation pour que le corps en mouvement se déplace, en se basant sur les informations de circulation ;

une section de paramétrage de route de circulation (550, 555) qui calcule chaque pourcentage de sélection de la pluralité de routes de circulation quand le module de reconnaissance de signal de requête reconnaît le signal de requête, et qui paramètre une route de circulation recommandée en se basant sur le pourcentage de sélection ; et

une section de notification pour notifier la route de circulation recommandée au module terminal de façon à ce que la route de circulation puisse être délivrée en sortie par la section de sortie du module terminal.

**11.** Système de guidage (200) selon la revendication 10,
dans lequel le module de reconnaissance de régularité de la circulation reconnaît la régularité de circulation sur la route de circulation recommandée, et
dans lequel la section de paramétrage de route de circulation est adaptée pour recalculer le pourcentage de sélection en se basant sur la régularité de circulation de la route de circulation recommandée et sur la régularité de circulation des autres routes de circulation, et re-paramètre la route de circulation recommandée en se basant sur le pourcentage de sélection.

**12.** Système de guidage selon les revendications 10 ou 13,
dans lequel le module d'acquisition d'informations de position actuelle acquiert des informations de position actuelle du corps en mouvement équipé du module terminal auquel la route de circulation est notifiée par la section de notification, et
dans lequel, si la section de paramétrage de route de circulation détermine que le corps en mouvement ne se déplace pas sur la route de circulation recommandée en se basant sur les informations de position actuelle du corps en mouvement et sur la route de circulation recommandée, la section de paramétrage de route de circulation modifie le pourcentage de sélection.

**13.** Système de guidage (200) selon la revendication 14,
dans lequel, si la section de paramétrage de route de circulation (550, 555) détermine que le corps en mouvement ne se déplace pas sur la route de circulation recommandée, la section de paramétrage de route de circulation réduit le pourcentage attribué à une autre route de circulation sur laquelle le corps en mouvement se déplace actuellement.

**14.** Procédé de guidage comprenant les étapes consistant à :

acquérir des informations de localisation géographique, des informations de position actuelle relatives à une position actuelle d'un corps en mouvement, des informations de destination relatives à une position d'une destination vers laquelle le corps en mouvement se déplace, et des informations de circulation relatives à une condition de circulation pour le corps en mouvement ;

rechercher une route de circulation pour le corps en mouvement en se basant sur les informations de position actuelle, sur les informations de destination et sur les informations de localisation géographique ;

reconnaître une régularité de circulation pour que le corps en mouvement se déplace sur la pluralité de routes de circulation en se basant sur les informations de circulation ;

calculer chaque pourcentage de sélection de la pluralité de routes de circulation en se basant sur la régularité de circulation sur la pluralité de routes de circulation ; et

paramétrer et notifier une route de circulation recommandée en se basant sur le pourcentage de sélection.

**15.** Procédé de guidage selon la revendication 14,
dans lequel la régularité de circulation sur la pluralité de routes de circulation et le pourcentage de sélection de chacune de la pluralité de routes de circulation sont recalculés après la notification de la route de circulation recommandée, et
dans lequel la route de circulation recommandée est re-paramétrée en se basant sur le pourcentage de sélection recalculé.

**16.** Programme de guidage pour exécuter le procédé de guidage selon la revendication 14 ou 15 au moyen d'un ordinateur.

**17.** Support d'enregistrement contenant le programme de guidage selon la revendication 16 d'une manière lisible par un ordinateur.

# FIG.1

```
                                          100
┌─────────────────────────────────────────────────┐
│ NAVIGATION DEVICE                                 │
│                      170          160             │
│                  ┌─────────┐   ┌─────────┐         │
│                  │ MEMORY  │   │ STORAGE │         │
│                  └────┬────┘   └────┬────┘         │
│    110       Ssc      │             │              │
│  ┌────────┐    ┌──────┴───────┐                    │
│  │ SENSOR ├────┤  PROCESSOR   │~180                │
│  └────────┘    └──┬────────┬──┘                    │
│         Svi       │        │      Sad              │
│                   │        │              150      │
│  120              │        │         ┌──────────┐  │
│  ┌──────────┐     │        │         │  SOUND   │  │
│  │  VICS    │     │        │         │  OUTPUT  │  │
│  │ RECEIVER │     │        │         │ SECTION  │  │
│  └──────────┘     │        │         └──────────┘  │
│          Sin─┐    │        │    ┌─Sdp              │
│  ┌──────────┐│    │        │    │  ┌──────────┐    │
│  │ TERMINAL ││    │        │    │  │ TERMINAL │    │
│  │  INPUT   ││    │        │    │  │ DISPLAY  │    │
│  │ SECTION  │└130 │    140─┘    │  └──────────┘    │
│  └──────────┘                                      │
└─────────────────────────────────────────────────┘
```

# FIG.2

VM

VMx

ROUTE 1
POST OFFICE
PARK
VMx
ZP

ROUTE 1
POST OFFICE
PARK
VMxA

VMxB

VMxC

# FIG.3

TRAFFIC-CONGESTION PREDICTION TABLE

# FIG.4

| DATE CLASSIFICATION | WORKDAY | SAT | SUN LEGAL HOLIDAY | SPECIAL DAY 1 | SPECIAL DAY 2 | · · · | DAY BEFORE LONG HOLIDAY | FIRST DAY OF LONG HOLIDAY | MIDDLE DAY OF LONG HOLIDAY | LAST DAY OF LONG HOLIDAY | DAY BEFORE THE END OF LONG HOLIDAY |
|---|---|---|---|---|---|---|---|---|---|---|---|
| DATE CLASSIFICATION ID | ID1 | ID2 | ID3 | ID4 | ID5 | ID6 | ID7 | ID8 | ID9 | ID10 | ID11 |
| 11 | TIME-SERIES DATA | TIME-SERIES DATA | · · · | · · · | · · · | · · · | · · · | · · · | · · · | · · · | · · · |

12i  12i

12i  12i

EP 1 521 058 B1

# FIG.5

20

| SUN | MON | TUE | WED | THU | FRI | SAT |
|---|---|---|---|---|---|---|
| | 1<br>ID1 | 2<br>ID1 | 3<br>ID1 | 4<br>ID1 | 5<br>ID1 | 6<br>ID2 |
| 7<br>ID3 | 8<br>ID1 | . . . | . . . | . . . | . . . | . . . |
| . . . | . . . | . . . | . . . | . . . | . . . | . . . |
| . . . | . . . | . . . | . . . | . . . | . . . | . . . |
| 28<br>ID3 | 29<br>ID1 | 30<br>ID1 | 31<br>ID1 | | | |

# F I G . 6

180

PROCESSOR

| CURRENT-POSITION RECOGNIZER | ~181 |

| DESTINATION RECOGNIZER | ~182 |

| GUIDANCE PROVIDING SECTION | ~183 |

| DISPLAY CONTROLLER | ~184 |

| MAP MATCHING SECTION | ~185 |

| COORDINATE MATCHING SECTION | ~186 |

| TRAFFIC-CONGESTION RECOGNIZER | ~187 |

| ROUTE PROCESSOR | ~188 |

| INFORMATION RETRIEVER | ~189 |

| CALENDAR MODIFIER | ~190 |

| TIMER | ~191 |

# FIG.7

# FIG.8

PROCESSING FOR MODIFYING
CALENDAR TEMPLATE

S101 — MODIFICATION
OF CALENDAR TEMPLATE
REQUESTED? → N

Y

S102 — RECOGNIZE DATE,
CLASSIFICATION ID No.

S103 — READ CALENDAR TEMPLATE

S104 — EACH
INFORMATION IS
IDENTICAL TO INFORMATION
IN CALENDAR
TEMPLATE? → Y

N

S105 — MODIFY CALENDAR TEMPLATE

END

# FIG.9

20

| SUN | MON | TUE | WED | THU | FRI | SAT |
|---|---|---|---|---|---|---|
|  | 1<br>ID1 | 2<br>ID1 | 3<br>ID1 | 4<br>ID1 | 5<br>ID4 | 6<br>ID2 |
| 7<br>ID3 | 8<br>ID1 | . . . | . . . | . . . | . . . | . . . |
| . . . | . . . | . . . | . . . | . . . | . . . | . . . |
| . . . | . . . | . . . | . . . | . . . | . . . | . . . |
| 28<br>ID3 | 29<br>ID1 | 30<br>ID1 | 31<br>ID1 |  |  |  |

# FIG.10

```
                    ( START )
                        │
                        │◄──────────────────┐
                        ▼                    │
                    TRAVEL                   │
S201           ROUTE SEARCH      ──N────────┘
               REQUESTED?
                        │
                        Y
                        ▼
S202      │  ACQUIRE CURRENT-POSITION  │
                        │
                        ▼
S203      │     ACQUIRE DESTINATION    │
                        │
                        ▼
S204      │  ACQUIRE SETTING INFORMATION  │
                        │
                        ▼
                  TRAFFIC-CONGESTION        N
S205         PREDICTION REQUESTED?   ────────┐
                        │                    │
                        Y                    │
                        ▼                    │
S207   │ RECOGNIZE CLASSIFICATION ID No. │  │
       │   FROM CALENDAR TEMPLATE        │  │
                        │                    │
                        ▼                    │
S208   │   ACQUIRE TIME-SERIES DATA   │     │
                        │                    │
                        ▼◄──────────────────┘
S206   │   SEARCH FOR TRAVEL ROUTE    │
                        │
                        ▼
S209   │    COORDINATE MATCHING       │
                        │
                        ▼
S210   │         NAVIGATE            │
                        │
                        ▼
                    (  END  )
```

# FIG.11

START

S11 — ARRIVED AT DESTINATION? → Y

N

S12 — ACQUIRE VICS

S13 — HEAVY OR SLOW TRAFFIC ON SCHEDULED ROUTE? → N

Y

S15 — SEARCH FOR DETOUR ROUTE (EX. 2 ROUTES)

S16 — COMPUTE TIME REQUIRED FOR ROUTE (3 ROUTES INCL. 2 ADDITIONAL ROUTES)

S17 — COMPUTE WEIGHTING

S18 — DISPLAY 1 ROUTE ACCORDING TO APPEARANCE PROBABILITY CORRESPONDING TO WEIGHTING

S14 — 5 MINUTES PAST SINCE THE LAST PROCESSING

END

# FIG.12

200

400

500

300

TERMINAL UNIT

400

TERMINAL UNIT

SERVER

St

St

TERMINAL UNIT

Ssv

St

400

# FIG.13

400

```
              ┌──────────────┐
              │   MEMORY     │── 420
              └──────┬───────┘
                     │
  410    Stt    430  │        110
┌──────────┐  ┌──────────┐  ┌──────────┐
│TRANSCEIVER├──┤PROCESSOR ├──┤  SENSOR  │
└──────────┘  └──┬───┬───┘  └──────────┘
         Sad     │   │    Ssc
                 │   │  Sdp
                 │   │       140
┌──────────┐  ┌──────────┐
│  SOUND   │  │ TERMINAL │
│  OUTPUT  │  │ DISPLAY  │
│ SECTION  │  └──────────┘
└──────────┘
  150
           Sin
      ┌──────────────┐
      │   TERMINAL   │
      │ INPUT SECTION│── 130
      └──────────────┘
```

St

# FIG.14

430

PROCESSOR

| CURRENT-POSITION RECOGNIZER | ~181 |

| DESTINATION RECOGNIZER | ~182 |

| GUIDANCE PROVIDING SECTION | ~183 |

| DISPLAY CONTROLLER | ~184 |

| MAP MATCHING SECTION | ~185 |

| COORDINATE MATCHING SECTION | ~186 |

# FIG.15

500

# FIG.16

550

## CPU

| MAP OUTPUT SECTION | ~551 |

| VICS DATA ACQUIRER | ~552 |

| TRAFFIC-CONGESTION RECOGNIZER | ~553 |

| SERVER COORDINATE MATCHING SECTION | ~554 |

| ROUTE PROCESSOR | ~555 |

| INFORMATION RETRIEVER | ~556 |

| CALENDAR MODIFIER | ~557 |

| TIMER | ~558 |

# FIG.17

TERMINAL UNIT

SERVER

( START )

( START )

S301 — MODIFICATION OF CALENDAR TEMPLATE REQUESTED? — N

Y

S302 — GENERATE CALENDAR MODIFICATION REQUEST INFORMATION

S303 — TRANSMIT

RECEIVE — S304

S305 — RECOGNIZE DATE, CLASSIFICATION ID No.

S306 — READ CALENDAR TEMPLATE

S307 — EACH INFORMATION IS IDENTICAL TO INFORMATION IN CALENDAR TEMPLATE? — Y

N

S308 — MODIFY CALENDAR TEMPLATE

( END )

( END )

# FIG.18

TERMINAL UNIT

( START )

S401 — TRAVEL ROUTE SEARCH REQUESTED? — N

↓ Y

S402 — ACQUIRE CURRENT-POSITION

S403 — ACQUIRE DESTINATION

S404 — ACQUIRE SETTING INFORMATION

S405 — TRANSMIT

SERVER

( START )

S406 — RECEIVE

S407 — TRAFFIC-CONGESTION PREDICTION REQUESTED? — N

↓ Y

S409 — RECOGNIZE CLASSIFICATION ID No. FROM CALENDAR TEMPLATE

S410 — ACQUIRE TIME-SERIES DATA

S408 — SEARCH FOR TRAVEL ROUTE

S412 — RECEIVE

S411 — TRANSMIT

S413 — COORDINATE MATCHING

S414 — NAVIGATE

( END )

( END )

**EP 1 521 058 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9113290 A
- US 20020128766 A